**Europäisches Patentamt**

**European Patent Office**

**Office européen des brevets**

(19)

(11) Veröffentlichungsnummer: **0 027 594**
**B1**

(12)

# EUROPÄISCHE PATENTSCHRIFT

(45) Veröffentlichungstag der Patentschrift:
**09.05.84**

(51) Int. Cl.³: **G 06 K 7/10,** G 06 K 7/015

(21) Anmeldenummer: **80106070.8**

(22) Anmeldetag: **07.10.80**

(54) Verfahren und Vorrichtung zum Identifizieren von Gegenständen.

(30) Priorität: **23.10.79 DE 2942747**
**15.04.80 DE 3014350**

(43) Veröffentlichungstag der Anmeldung:
**29.04.81 Patentblatt 81/17**

(45) Bekanntmachung des Hinweises auf die Patenterteilung:
**09.05.84 Patentblatt 84/19**

(84) Benannte Vertragsstaaten:
**AT BE CH DE FR GB IT LI LU NL SE**

(56) Entgegenhaltungen:
**DE - A - 2 338 561**
**DE - A - 2 350 474**
**DE - A - 2 422 944**
**DE - A - 2 439 913**

(73) Patentinhaber: **Scantron GmbH & Co. Elektronische Lesegeräte KG, Legienstrasse 14,
D-6230 Frankfurt/Hoechst (DE)**

(72) Erfinder: **Wevelsiep, Klaus, Dr., Fuchstanzstrasse 11,
D-6239 Kriftel (DE)**
Erfinder: **Scholze, Hans, Dipl.-Kfm.,
Phil.-Holzmannstrasse 27, D-6072 Dreieich (DE)**

(74) Vertreter: **Eisenführ & Speiser, Martinistrasse 24,
D-2800 Bremen 1 (DE)**

## Beschreibung

Die Erfindung betrifft ein Verfahren bzw. eine Vorrichtung zum Identifizieren von Gegenständen gemäss dem Oberbegriff einer der Ansprüche 1, 7, 11 bzw. 13.

Derartige Verfahren und Vorrichtungen sind aus der DE-A-2 338 561 bekannt. Bei den zu identifizierenden Gegenständen handelt es sich beispielsweise um Handelsware, Warenhausartikel od.dgl., die in maschinell lesbarer Form gekennzeichnet sind. Zu diesem Zweck werden Kennzeichnungen auf den Objekten befestigt oder angebracht, welche mit Zeichen eines maschinell lesbaren Codes, z.B. des OCR-Codes bedruckt sind. Eine derartige Kennzeichnung kann aus Qualitäts-, Dimensions-, Preisangaben, aus der Artikelnummer usw. bestehen. Diese Identifizierungsdaten sind in irgendeiner Weise auf den Oberflächen der Gegenstände angebracht.

Derartige Kennzeichnungen lassen sich nur schwer maschinell lesen, da sich die Gegenstände in ihrer Grösse unterscheiden, und da diese Kennzeichnungen z.B. auf Klebeetiketten an verschiedenen Stellen des Gegenstandes aufgebracht werden. Beim Lesen der Kennzeichnung kann daher nicht davon ausgegangen werden, dass diese in einer bestimmten Position mit festgelegter Orientierung zu bestimmten Zeiten zur Verfügung steht. Das Lesen dieser Kennzeichnungen ist daher nicht vergleichbar mit dem Lesen von Lochkarten od.dgl., bei dem eine Karte in einer genau definierten Leseposition zu genau festgelegten Zeiten zur Verfügung steht. Im vorliegenden Fall trifft genau das Entgegengesetzte zu. Das Datenfeld auf dem Gegenstand erscheint nur mehr oder weniger näherungsweise an einem bestimmten Ort, und auch die Ausrichtung des Datenfeldes ist relativ willkürlich.

Derartige Verfahren und Vorrichtungen zum Identifizieren von Gegenständen werden z.B. an den Kassenplätzen von Supermärkten usw. eingesetzt, um ein automatisches Erfassen des Preises und/oder der Artikelnummer derjenigen Gegenstände zu ermöglichen, welche ein Kunde kaufen will und zu diesem Zweck an den Kassenplatz gebracht hat. Die Warenartikel, wie Schachteln unterschiedlicher Form und Grösse, Flaschen, Kartons, Dosen usw. werden dann einzeln auf dem Bildfenster angeordnet, wobei lediglich diejenige Oberfläche, welche das zur Warenkennzeichnung verwendete Datenfeld trägt, gegen das Bildfenster gerichtet sein muss. Die Datenfelder auf den unterschiedlichen Gegenständen erscheinen somit unterschiedlich ausgerichtet an unterschiedlichen Stellen innerhalb des Bildfensters. Ferner erscheinen die Datenfelder nicht in festen Zeitabständen an der Ablesestation. Die Ablesestation muss daher nach dem Datenfeld suchen und anschliessend in Richtung der Datenspuren des Datenfeldes die Zeichen der Datenspuren auslesen. Die ausgelesenen Zeichen lassen sich dann als elektrische Signale der Kasse zuleiten, welche den Preis und eventuell auch die Artikelnummer bzw. die Artikelgruppe auf dem Kassenbon ausdrucken kann.

Das auf dem Gegenstand aufgebrachte Datenfeld ist mit mehreren Kontrastlinienmustern (PIC) versehen, welche mehrere Linien in unterschiedlichem Abstand und/oder mit unterschiedlicher Linienbreite besitzen. Die Kontrastlinienmuster dienen dazu, das Datenfeld, z.B. das bedruckte Etikett, zuverlässig und eindeutig gegenüber sonstigen Zeichen und Linienmustern abzuheben, die möglicherweise auf der Oberfläche des Gegenstandes in der Umgebung des Datenfeldes vorhanden sind. Ausserdem besitzen die Kontrastlinienmuster bezüglich den Datenspuren innerhalb des Datenfeldes vorgegebene Positionen und Orientierungen und können daher verwendet werden, aus ihren Positionen und Orientierungen die Position und Orientierung der Datenspuren relativ zu den Rasterzeilen zu ermitteln, um anschliessend ein Raster in Richtung der Datenspuren zu erzeugen, welches die Zeichen innerhalb der Datenspuren liest.

Bei dem aus der DE-A-2 338 561 bekannten Verfahren erfolgt die Erkennung des Kontrastlinienmusters erst dann, wenn das Kontrastlinienmuster im wesentlichen senkrecht zur Richtung seiner Linien abgetastet wird und die dadurch im Videosignal enthaltene Impulsfolge gleich einer vorgegebenen Impulsfolge ist, die dem verwendeten Kontrastlinienmuster entspricht. Dieses Verfahren stellt somit ein Korrelationsverfahren dar. Darüberhinaus besitzt das Zeilenablenksignal die Form eines stetig und linear ansteigenden Sägezahnsignals, das eine stetige Abtastung der einzelnen Rasterzeilen zur Folge hat. Die Relativlage des Kontrastlinienmusters – und damit der Datenspuren – zu den Rasterzeilen wird dadurch ermittelt, dass die im Schnittpunkt zwischen einer Rasterzeile und dem Kontrastlinienmuster vorhandenen Amplituden des Zeilen-Rampengenerators und des Zeilenfortschalt-Rampengenerators in Haltegliedern abgespeichert werden, wenn das Kontrastlinienmuster (PIC) vom PIC-Dekoder als erkannt gemeldet wird. Der Suchbetrieb wird solange fortgesetzt, bis mindestens zwei Schnittpunkte A, B zwischen Rasterzeilen und Kontrastlinienmuster auftreten. Aus den den Schnittpunkten entsprechenden Amplituden-Koordinaten lässt sich die relative Winkellage zwischen Kontrastlinienmuster und Rasterzeilen analog berechnen. Diese Speicherung der den Schnittpunkten zwischen Rasterzeilen und PIC entsprechenden analogen Amplitudensignalen zur anschliessenden analogen Ermittlung der Relativlage des PICs – und der Datenspuren – erweist sich als aufwendig und nachteilig, da zusätzlich zu dem zur PIC-Erkennung benötigten Zeilen-Taktimpulszähler entsprechende Analogschaltungen benötigt werden. Schliesslich sind die abgespeicherten analogen Amplitudenwerte der Zeit- und Wärmedrift unterworfen, und eine genaue Zuordnung der sich zeitlich stetig ändernden Zeilenablenkspannung zu bestimmten Schnittpunkten innerhalb des Zeilenrasters ist nicht gewährleistet. Die Bestimmung des Winkels zwischen den Rasterzeilen und dem Kontrastlinienmuster bzw. den Datenspuren ist daher ungenau.

Aus der DE-A-2 439 913 ist es bei Vorrichtungen zum Lesen kodierter Informationen, die durch das Vorhandensein oder Nicht-Vorhandensein von Informationsmarkierungen gegeben ist, bekannt, den Schnittwinkel zwischen Datenspur und Rasterzeilen durch eine Abzählung von Impulsen zu bestimmen, die mit dem Beginn jeder Abtastzeile oder einer anderen Position auf der Zeile ausgelöst werden. Ausserdem wird das Vorhandensein bzw. Nicht-Vorhandensein der Informationsmarkierungen durch das Auszählen von Taktimpulsen während einer Dunkel- oder Hellamplitude im Videosignal ermittelt.

Aufgabe der Erfindung ist es demgegenüber, ein Verfahren und eine Vorrichtung der eingangs genannten Art anzugeben, bei dem bzw. der ein rasches und störungsfreies Abtasten der Rasterzeilen und eine genaue und störungsfreie Bestimmung des Winkels zwischen den Rasterzeilen und dem Kontrastlinienmuster im Suchbetrieb möglich ist, um anschliessend im Lesebetrieb die in den Datenspuren angeordneten Kontrastzeichen fehlerfrei auslesen zu können.

Diese Aufgabe wird bei dem Verfahren der eingangs genannten Art erfindungsgemäss durch die kennzeichnenden Merkmale des Anspruches 1 oder 6 gelöst.

Eine weitere erfindungsgemässe Alternative stellt das Verfahren gemäss Patentanspruch 11 dar. Auf dem Datenfeld befindet sich mindestens ein vorgegebenes Kontrastlinienmuster (PIC) aus mehreren parallelen Linien. Im ersten Verfahrensschritt, dem Suchbetrieb, wird unter verschiedenen Suchwinkeln $\alpha$ in einem relativ weitzeiligen Raster solange abgetastet, bis das bzw. die Kontrastlinienmuster von mindestens zwei Rasterzeilen geschnitten und erkannt werden. Im zweiten Verfahrensschritt wird aus dem Schnittwinkel zwischen den Rasterzeilen des letzten Suchbetrieb-Rasterdurchlaufs und der(n) Datenspur(en) die Position und Orientierung der(n) Datenspur(en) relativ zum Bildfenster berechnet. Im dritten Verfahrensschritt wird dann das engzeilige Leseraster unter einem Winkel durchlaufen, der gleich der Summe aus berechnetem Schnittwinkel $\beta$ und dem zuletzt eingestellten Suchwinkel $\alpha_i$ ist.

Die gestellte Aufgabe wird durch eine Vorrichtung gemäss Anspruch 13 gelöst.

Die Vorteile der Erfindung liegen insbesondere darin, dass sowohl das Zeilenablenksignal als auch das Zeilenfortschaltsignal von einem aus einem digitalen Zähler gelieferten digitalen Signal abgeleitet und durch je einen nachgeschalteten Digital/Analogwandler erzeugt werden, so dass neben einem stufenförmig – oder alternativ auch stetig – ansteigenden Zeilenablenk- und Zeilenfortschaltsignal entsprechende Zählerstände zur Verfügung stehen, die den jeweils aktuell abgetasteten Rasterpunkt kennzeichnen.

Die Zählerstände bilden ein rasterfestes Zählkoordinatensystem, so dass die aktuellen Zählkoordinaten des aktuell abgetasteten Rasterpunkts ständig als digitale Zahl den beiden Zählern entnehmbar sind. Die zur Ermittlung des Winkels $\beta$ zwischen Rasterzeilen und Kontrastlinienmuster (PIC) benötigten Schnittpunktskoordinaten sind daher beim Erkennen eines PICs in digitaler Form verfügbar und zur weiteren Verarbeitung abspeicherbar. Dadurch ist eine genaue und störungsfreie Angabe der benötigten Schnittpunktskoordinaten – ohne zusätzliche elektronische Einrichtungen – allein durch die Ablenkgeneratoren in digitaler Form möglich. Der Winkel zwischen PIC und Rasterzeilen lässt sich anschliessend digital sehr genau bestimmen und das Raster zum Lesen der Datenspuren sehr genau einstellen, wodurch die Fehlerwahrscheinlichkeit beim Auslesen der Kontrastzeichen in den Datenspuren verringert wird.

Besonders bevorzugt wandelt der dem ersten Modulo-Zähler nachgeschaltete Digital/Analogwandler den Zählerstand in ein zeitproportional, stufenförmig oder stetig-inkrementierendes Zeilenablenksignal um, das eine punktweise Abtastung der Rasterzeilen ermöglicht.

Die Kontrastlinienmuster aus mehreren geschlossenen konzentrischen Linien besitzen bevorzugt die Form konzentrischer Kreislinien. Diese Form besitzt den Vorteil, dass das Kontrastlinienmuster unter einem beliebigen Winkel abgetastet und erkannt werden kann. Insbesondere lassen sich bei einem derartigen Kontrastlinienmuster aus einer im wesentlichen zentralen Abtastung in einfacher Weise die Zentrumskoordinaten des Kontrastlinienmusters berechnen. Bei Kenntnis der Zentrumskoordinaten der auf dem Datenfeld aufgebrachten konzentrischen Kontrastlinienmuster lässt sich dann in einem weiteren Rechenschritt die Orientierung der Datenspuren relativ zu einer Geraden angeben, die durch die Zentrumskoordinaten der Kontrastlinienmuster gegeben ist. Ganz besonders bevorzugt werden drei derartige kreiskonzentrische Kontrastlinienmuster auf einer Geraden auf dem Datenfeld aufgedruckt, um mit einer gewissen Redundanz diese Orientierungsgerade ermitteln zu können.

Tastet dagegen das Suchraster unter verschiedenen diskreten Suchwinkeln das auf das Target abgebildete Bildfeld ab, so wird bevorzugt nur ein Kontrastlinienmuster (PIC) aus mehreren parallelen geraden Linien unterschiedlicher Linienbreite und Linienabstände verwendet, um die Position und die Orientierung der Datenspuren zu ermitteln.

Besonders bevorzugt besitzt das Raster im dritten Verfahrensschritt (Lesebetrieb) eine gegenüber dem Raster des ersten Verfahrensschrittes (Suchbetrieb) verringerte Grösse, die dem zu lesenden Datenfeld angepasst ist und eine möglichst grosse Dichte an Rasterzeilen aufweist. Durch diese Massnahme lässt sich das Datenfeld im Lesebetrieb in der kleinstmöglichen Zeit abtasten.

Besonders bevorzugt kennzeichnet die Länge einzelner Kontrastlinienmuster oder der Abstand der Kontrastlinienmuster (PIC) auch die Grösse des Datenfeldes. Zu diesem Zweck lassen sich mehrere Kontrastlinienmuster vorgegebener Grösse z.B. vor und hinter den Datenspuren anbringen. Der Abstand benachbarter Rasterzeilen wird im Suchbetrieb so klein gewählt, dass eine Vielzahl von Rasterzeilen das bzw. die Kontrastlinienmuster beim Durchlaufen des letzten Suchrasters schneiden. Aus den Schnittpunkts-Zählkoordinaten werden dann die Zentrumskoordinaten der Kontrastlinienmuster – und damit die Länge oder Grösse des Datenfelds – im Zählkoordinatensystem des letzten Suchrasters berechnet. Anschliessend wird die Länge des Datenfelds im Zählkoordinatensystem des Leserasters berechnet, das gegenüber dem Suchraster um den Schnittwinkel $\beta$ gedreht ist. Anschliessend wird das Leseraster auf etwa die Grösse des Datenfelds begrenzt. Zu diesem Zweck wird die untere und die obere Grenze des Zählintervalls des ersten und des zweiten Modulo-Zählers auf einem der Grösse des Datenfelds entsprechenden Wert gesetzt.

Oder es wird nur ein Kontrastlinienmuster mit parallelen Linien vorgegebener Länge verwendet, aus der sich eine Kantenlänge des abzutastenden Datenfelds bestimmen lässt. Die andere Kantenlänge des Datenfelds ist dann vorgegeben.

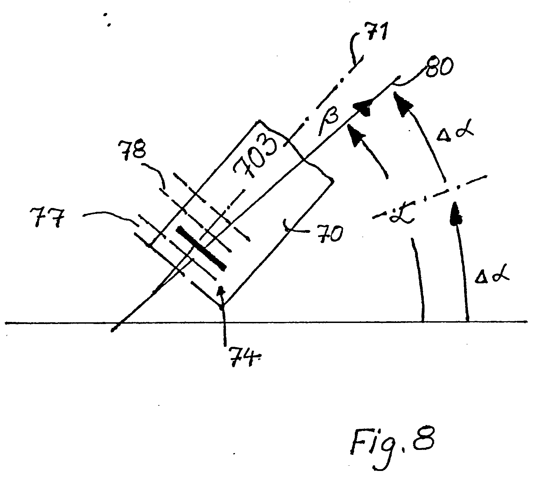

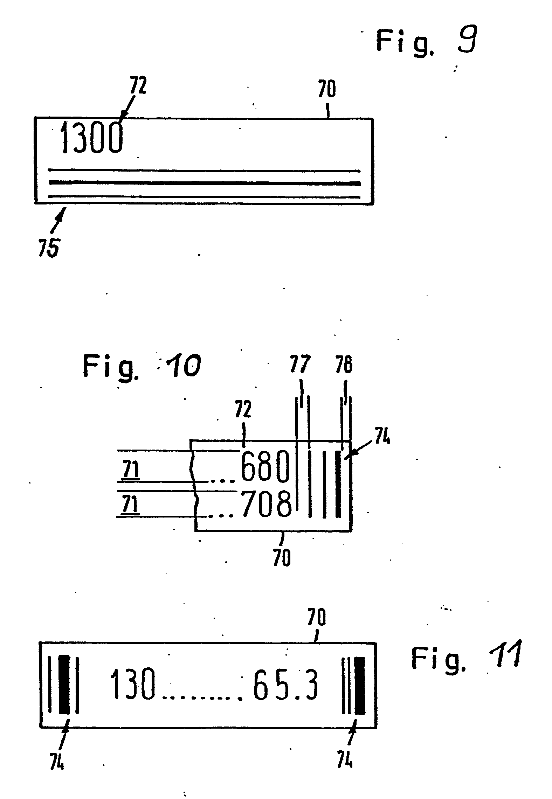

Das Kontrastlinienmuster befindet sich dann z.B. vor oder hinter den Datenspuren und verläuft senkrecht zu den Datenspuren (Fig. 8, 10 und 11). Alternativ liegt das Kontrastlinienmuster unter den Datenspuren und verläuft parallel zu diesen (Fig. 9).

Werden gemäss der alternativen Ausführungsform der Erfindung Kontrastlinienmuster erster und zweiter Art mit einer ersten bzw. zweiten Linien/Abstandsfolge aus parallelen Linien verwendet, so verläuft bevorzugt ein Kontrastlinienmuster erster Art parallel zu der Datenspur des Datenfelds, und die Kontrastlinienmuster zweiter Art stehen senkrecht zur Datenspur. Mindestens ein Kontrastlinienmuster erster Art, und ein Kontrastlinienmuster zweiter Art sind so lang, dass sie bei Durchlauf eines Suchrasters von mindestens jeweils zwei Rasterzeilen überlaufen werden, um aus den Schnittpunktskoordinaten der Rasterzeilen mit den Kontrastlinienmustern die Richtung der Kontrastlinienmuster berechnen zu können.

Bevorzugt ist ein Kontrastlinienmuster zweiter Art unmittelbar vor einem Kontrastlinienmuster erster Art angeordnet. Zusätzlich oder alternativ ist ein weiteres Kontrastlinienmuster zweiter Art unmittelbar hinter dem Kontrastlinienmuster erster Art angeordnet. Alle drei Kontrastlinienmuster besitzen senkrecht zu den Datenspuren eine vorgegebene Ausdehnung. Die Länge des Kontrastlinienmusters erster Art entspricht im wesentlichen bevorzugt der Länge der Datenspuren. Alternativ können die Kontrastlinienmuster zweiter Art auch unterhalb dem Kontrastlinienmuster erster Art angeordnet werden. Bei einer derartigen Länge und Anordnung der Kontrastlinienmuster wird während des Durchlaufs des Suchrasters mindestens ein Kontrastlinienmuster erster oder zweiter Art von mindestens zwei Rasterzeilen geschnitten; die dabei ermittelten Schnittpunktskoordinaten reichen zur Berechnung der Orientierung des betreffenden Kontrastlinienmusters, und damit der Orientierung der Datenspuren aus. Vorteilhaft ist bei der genannten Anordnung insbesondere, dass die Datenspuren frei sind von Kontrastlinienmuster, so dass das Auge eines Betrachters die in den Datenspuren enthaltenen Zeichen ohne Störung leicht erkennen kann.

Bei einer weiteren Ausführungsform der Erfindung werden die Kontrastlinienmuster erster und zweiter Art – miteinander senkrecht verlaufenden, parallelen Linien – abwechselnd in einer Kontrastlinienmuster-Spur angeordnet, deren Orientierung relativ zu der oder den Datenspuren bekannt ist und bevorzugt in vorgegebenem Abstand unterhalb der Datenspuren läuft. Die Länge der Kontrastlinienmuster wird so gross gewählt, dass bei Durchlauf des Suchrasters jedes Kontrastlinienmuster mindestens einmal von Rasterzeilen geschnitten wird. Aus den gespeicherten Zählkoordinaten der Schnittpunkte wird der Schnittwinkel zwischen Rasterzeilen des Suchrasters und den Datenspuren dann berechnet, wenn mindestens alle Kontrastlinienmuster erster Art oder alle Kontrastlinienmuster zweiter Art innerhalb der Kontrastlinienmuster-Spur geschnitten und entsprechende Zählkoordinaten der Schnittpunkte gespeichert werden, aus denen die Präsenz und die Richtung der Kontrastlinienmuster-Spur erkannt wird. Vorteilig ist dabei, dass die einzelnen Kontrastlinienmuster relativ klein sein können, dass unterhalb der Datenspuren lediglich noch eine weitere Kontrastlinienmuster-Spur vorhanden ist, welche die Lesbarkeit der Zeichen innerhalb der Datenspuren nicht beeinträchtigt, und dass insbesondere die Orientierung der Kontrastlinienmuster-Spur mit hoher Redundanz ermittelt werden kann, da jeweils entweder alle Kontrastlinienmuster erster Art oder alle Kontrastlinienmuster zweiter Art unter einem Schnittwinkel geschnitten werden, der grösser als 45° ist. Bei einer derartigen Anordnung ist die Gesamtanordnung der Kontrastlinienmuster einerseits etwa so kompakt wie die Anbringung eines einzigen relativ langen Kontrastlinienmusters unterhalb der Datenspuren. Aufgrund der abwechselnden Anordnung zueinander senkrecht stehender Kontrastlinienmuster erster und zweiter Art wird bei beliebiger Orientierung des Datenfelds auf dem Bildschirm immer die Gruppe der Kontrastlinienmuster erster Art oder die Gruppe der Kontrastlinienmuster zweiter Art genau erkannt, ohne dass das Suchraster schrittweise in vorgegebenen Suchwinkelschritten relativ zu dem Datenfeld gedreht werden müsste.

Die Zeilendichte wird während des Lesebetriebs bevorzugt auf den grösstmöglichen Wert gesetzt. Zu diesem Zweck wird das Inkrement des zweiten Modulo-Zählers auf den kleinstmöglichen Wert, den Wert 1, gesetzt. Dadurch besitzen dann die Stufen des Zeilenfortschaltsignals das kleinstmögliche Inkrement, welches sicherstellt, dass jeweils von einer Zeile auf die benachbarte Zeile fortgeschaltet wird.

Während des Suchbetriebs besitzt das Inkrement des zweiten Modulo-Zählers demgegenüber bevorzugt einen relativ grossen Wert, z.B. den Wert 10. Dadurch besitzt das Inkrement des stufenförmigen Zeilenfortschaltsignals gegenüber dem Lesebetrieb den 10fachen Wert, so dass am Ende einer Zeile um jeweils 10 Zeilen weitergesprungen wird, d.h. lediglich jede zehnte Zeile abgetastet wird.

Die Rasterdrehschaltung enthält bevorzugt einen Festwertspeicher, der die Kosinus- und Sinuswerte aller möglicher Drehwinkel enthält. An jedem Ausgang des Festwertspeichers befindet sich je ein Digital/Analogwandler. Die Rasterdrehschaltung enthält ferner einen ersten analogen Multiplizierer, der das Zeilenablenksignal mit dem Kosinuswert des gewünschten Drehwinkels multipliziert, einen zweiten analogen Multiplizierer, der das Zeilenablenksignal mit dem negativen Sinuswert des Drehwinkels multipliziert, einen dritten analogen Multiplizierer, der das Zeilenfortschaltsignal mit dem Kosinuswert des Drehwinkels multipliziert, und einen vierten analogen Multiplizierer, der das Zeilenfortschaltsignal mit dem Sinuswert des Drehwinkels multipliziert. Der Ausgang des ersten und des vierten Multiplizierers wird in einem ersten Addierglied addiert und an den ersten Ausgang der Rasterdrehschaltung abgegeben. Der Ausgang des zweiten und des dritten Multiplizierers wird in einem zweiten Addierglied multipliziert und dem zweiten Ausgang der Rasterdrehschaltung zugeführt. Vorteilhaft ist bei dieser Verwirklichung der Rasterdrehschaltung insbesondere, dass die Kosinus- und Sinuswerte aller gewünschten Drehwinkel in einem Festwertspeicher enthalten sind und z.B. von einem zentralen Prozessor in die Rasterdrehschaltung eingelesen werden können. Durch die digitale Speicherung der benötigten Kosinus- und Sinuswerte wird eine genaue Rasterdrehung ermöglicht.

Im folgenden wird ein Ausführungsbeispiel der Erfindung anhand der Zeichnung näher erläutert. Es zeigen:

Fig. 1 eine erste Ausführungsform eines Datenfelds mit drei identischen, in sich geschlossenen Kontrastlinienmustern;

Fig. 2 eine zweite Ausführungsform des Datenfelds mit mehreren verschiedenen Kontrastlinienmustern;

Fig. 3 eine dritte Ausführungsform eines Datenfelds mit zwei verschiedenen Kontrastlinienmustern vor bzw. unter der Datenspur;

Fig. 4 eine vierte Ausführungsform eines Datenfelds mit einer Kontrastlinienmuster-Spur, die abwechselnd Kontrastlinienmuster erster und zweiter Art enthält;

Fig. 5 ein Blockschaltbild einer erfindungsgemässen Vorrichtung;

Fig. 6a und 6b eine schematische Darstellung eines in einem ortsfesten Koordinatensystem gedrehten Abtastrasters; und

Fig. 7a und 7b ein Blockschaltbild des Ablenksystems der erfindungsgemässen Vorrichtung.

Fig. 8 eine fünfte Ausführungsform eines Datenfelds mit einem Kontrastlinienmuster aus parallelen Linien;

Fig. 9 eine sechste Ausführungsform eines Datenfelds mit einem Kontrastlinienmuster aus parallelen Linien;

Fig. 10 eine siebte Ausführungsform eines Datenfelds mit einem Kontrastlinienmuster aus parallelen Linien und zwei Datenspuren;

Fig. 11 eine achte Ausführungsform eines Datenfelds mit zwei parallelen Kontrastlinienmustern aus parallelen Linien und einer Datenspur.

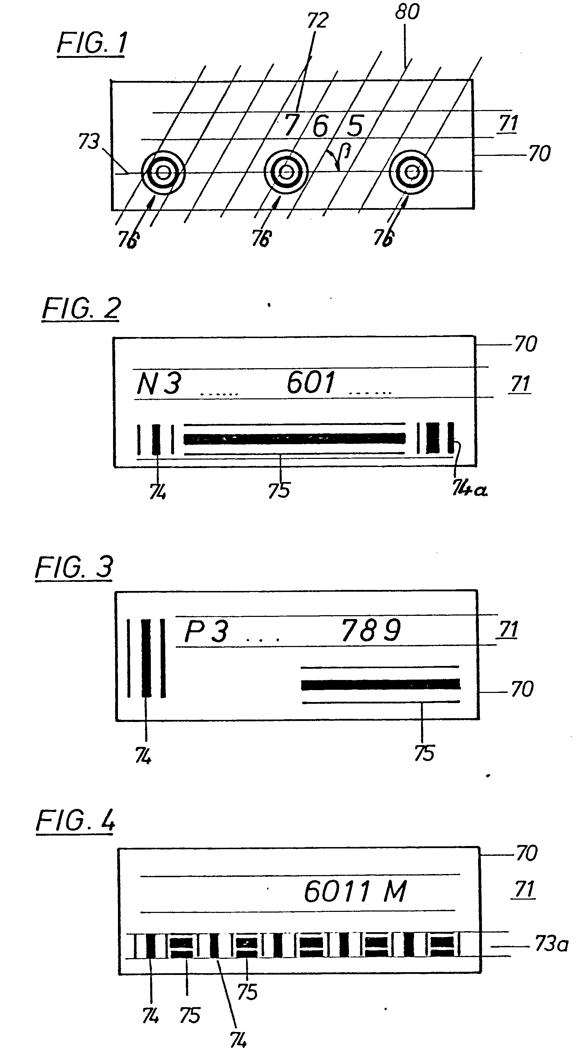

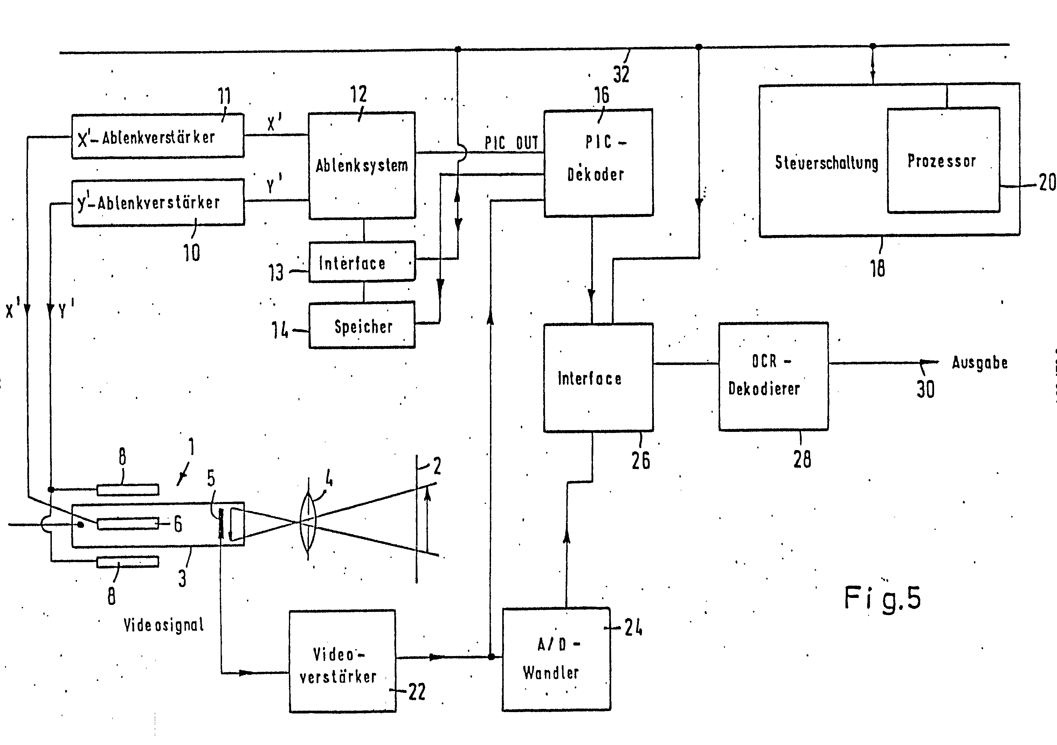

In den Fig. 1 bis 4 sind verschiedene Kennzeichnungen 70, z.B. Preisetiketten, dargestellt, die z.B. auf einem Behälter, einer Packung, einem Warenartikel oder auf Papier, Formularen usw. aufgeklebt sind und in willkürlicher Position und Ausrichtung vor einem Bildfenster 2 eines Vidikons 3 erscheinen, vgl. Fig. 5.

Die Kennzeichnungen 70 besitzen jeweils ein Datenfeld, das in mindestens einer Datenspur 71 kontrastierende Zeichen 72 zur Identifizierung der mit dieser Kennzeichnung versehenen Ware enthält. Die kontrastierenden Zeichen bestehen bevorzugt aus Klarschriftzeichen einer bekannten, maschinell lesbaren Schrifttype, z.B. der OCR-A-Schrift bzw. der OCR-B-Schrift.

Auf dem Datenfeld sind mehrere Kontrastlinienmuster 74, 75, 76, im folgenden auch Positionsidentifizierungskode-Muster, PIC-Muster, genannt, in vorgegebener Position und Orientierung zur Datenspur angeordnet. Die PIC-Muster bestehen aus mehreren Linien, die in vorgegebenem Abstand und mit vorgegebener Linienbreite vor, unter, über oder hinter der oder den Datenspuren angeordnet sind.

Gemäss Fig. 1 sind drei identische PIC-Muster 76 aus konzentrischen, unterschiedlich breiten Kreislinien unterhalb der Datenspur 71 angeordnet. Alternativ lassen sich die Linienmuster auch als Rechteck-, Quadrat- oder Dreieckformen usw. ausbilden. Die in Fig. 1 dargestellte Kreisform der PIC-Muster besitzt jedoch gegenüber anderen geschlossenen PIC-Mustern den Vorteil, dass die PIC-Muster unabhängig von der jeweiligen Relativlage des Datenfelds 70 von Rasterzeilen 80 des Suchrasters geschnitten wird, und sich dann aus den Schnittpunktskoordinaten, die in der Schaltung nach Fig. 5 gespeichert werden, die Zentrumskoordinaten der PIC-Muster 76 berechnen lassen. Anschliessend wird die Verbindungsgerade zwischen den beiden äusseren PIC-Mustern 76 – und damit der Schnittwinkel $\beta$ zwischen den Rasterzeilen 80 und dieser Verbindungsgerade berechnet. Da die Verbindungsgerade 73 gemäss Fig. 1 parallel zur Richtung der Datenspur 71 verläuft, ist somit auch die Relativlage der Datenspur 71 im Koordinatensystem des Suchrasters bekannt, so dass sich anschliessend die erforderliche Drehung des Rasters durchführen lässt.

Die Fig. 2 bis 4 zeigen Datenfelder mit mehreren verschiedenen PIC-Mustern aus parallelen Linien mit unterschiedlichem Abstand und unterschiedlicher Linienbreite. Gemäss Fig. 2 ist unterhalb der Datenspur 71 ein Kontrastlinienmuster erster Art 74, daran anschliessend ein Kontrastlinienmuster zweiter Art, 75, und daran anschliessend ein Kontrastlinienmuster dritter Art, 74a, vorgesehen. Die Kontrastlinienmuster erster Art und dritter Art, 74 und 74a, verlaufen senkrecht zur Richtung der Datenspur 71 und zum Kontrastlinienmuster zweiter Art, 75. Diese Anordnung der PIC-Muster besitzt den Vorteil, dass in aller Regel das PIC-Muster 75 zur Erkennung ausreichend oft von Rasterzeilen 80 geschnitten wird, wobei diese Schnittpunkte zur Bestimmung des Schnittwinkels $\beta$ gespeichert werden. Für den Fall, dass die Rasterzeilen 80 das PIC-Muster 75 unter einem sehr kleinen Schnittwinkel $\beta$ überlaufen – d.h. im wesentlichen parallel zu den Linien des PIC-Musters 75 – werden die PIC-Muster erster und dritter Art, 74, 74a, unter einem relativ grossen Winkel geschnitten und bei geeigneter Mindestlänge der PIC-Muster 74, 74a, auch sicher erkannt.

Fig. 3 zeigt ein Kontrastlinienmuster erster Art, 74, vor der Datenspur 71, und ein Kontrastlinienmuster zweiter Art, 75, an der unteren Ecke des Datenfelds 70, parallel zur Datenspur 71. Auch bei dieser Anordnung der PIC-Muster ist sichergestellt, dass bei beliebiger Relativlage des Datenfelds 70 stets eines der PIC-Muster 74, 75, ausreichend oft von Rasterzeilen geschnitten wird und eine sichere Erkennung der Relativlage und -orientierung mindestens eines PIC-Musters gewährleistet ist, so dass der benötigte Schnittwinkel $\beta$ im rasterfesten Koordinatensystem berechnet werden kann.

Fig. 4 zeigt eine weitere Anordnung von Kontrastlinienmuster in einer Kontrastlinienmuster-Spur 73a unterhalb und parallel zur Datenspur 71. Kontrastlinienmuster erster Art 74 aus mehreren parallelen Linien, die senkrecht zur Datenspur 71 verlaufen, sind abwechselnd mit Kontrastlinienmuster zweiter Art, 75, deren parallele Linien parallel zur Datenspur 71 verlaufen, angeordnet. Die PIC-Muster 74, 75 sind so lang, dass jedes PIC-Muster 74, 75, bei Durchlauf des Suchrasters von mindestens einer Rasterzeile überlaufen wird. Für den Sonderfall, dass die Rasterzeilen im wesentlichen parallel zur Spur 73a verlaufen, wird jedes PIC-Muster erster Art, 74, geschnitten und die entsprechenden Schnittkoordinaten gespeichert; beim Sonderfall, dass die Rasterzeilen im wesentlichen senkrecht zur Spur 73a verlaufen, werden alle PIC-Muster zweiter Art, 75, geschnitten und deren Schnittpunktskoordinaten gespeichert. In allen anderen Fällen werden sowohl die PIC-Muster erster Art, 74, als auch die PIC-Muster zweiter Art, 75, geschnitten. In allen Fällen sind zur Berechnung der Spur-Richtung 73a, und damit des Schnittwinkels $\beta$ zwischen Rasterzeilen und Datenspur 71, hinreichend viel Schnittpunktskoordinaten vorhanden. Die Anordnung nach Fig. 4 besitzt den Vorteil, dass mit hoher Redundanz die Richtung der Spur 73a, und damit der gesuchte Schnittwinkel $\beta$ berechnet werden kann. Darüber hinaus wird durch die gleichmässig unter der Datenspur 71 angeordneten PIC-Muster die optische Lesbarkeit der Zeichen in der Datenspur 71 nicht behindert.

Obwohl nur PIC-Muster mit jeweils zwei Linien dargestellt sind, lassen sich auch PIC-Muster mit mehr als drei Linien einsetzen. Ferner lassen sich die PIC-Muster – abweichend von den Fig. 1 bis 4 – auch in anderer Position und anderer Orientierung bezüglich der Datenspuren anbringen. Darüber hinaus lassen sich auch PIC-Muster mit zueinander parallelen, gekrümmten oder gewellten Linien verwenden, deren Erkennung und die sich anschliessende Berechnung von charakteristischen Koordinaten jedoch im allgemeinen mit grösserem Aufwand verbunden ist. Wesentlich ist bei allen möglichen Anordnungen von PIC-Mustern, dass die PIC-Muster elektronisch relativ einfach erkennbar sind, und dass die Position und Orientierung der PIC-Muster relativ zu den Datenspuren und zu den Kanten der Kennzeichnung 70 bekannt sind, und dass hinreichend viel und grosse PIC-Muster vorgesehen werden, so dass bei dem Durchlauf des Suchrasters die Position und/oder die Orientierung hinreichend Fehler-PIC-Muster ermittelbar sind.

Fig. 5 zeigt das Blockschaltbild einer Ausführungsform der Vorrichtung. Ein Bildfenster 2, z.B. eine stationäre, beleuchtete Glasplatte mit einem Durchmesser von 10 bis etwa 20 cm, wird über ein stationäres Linsensystem 4 auf das Target 5 eines Vidikons 1 abgebildet. Das Vidikon 1 weist zwei um 90° gegeneinander versetzte Ablenkspulenpaare 6, 8 am Aussenumfang der evakuierten Bildröhre 3 auf. Anstelle der Ablenkspulenpaare 6, 8 lassen sich auch elektrostatische Ablenkplattenpaare verwenden. Das erste Ablenkspulenpaar 6 liegt in einer durch die Achse der Bildröhre 3 hindurchlaufenden Ebene, deren Schnittlinie mit dem Target 5 als bildfenster- oder bildröhrenfeste $x'$-Richtung bezeichnet wird. Das Anlagen einer Spannung an das erste Ablenkspulenpaar 6 hat eine Ablenkung des aus der Kathode 6 des Vidikons 1 austretenden Abtaststrahls in $x'$-Richtung zur Folge. Das zweite Ablenkspulenpaar 8 liegt ebenfalls in einer durch die Achse der Bildröhre 3 hindurchlaufenden Ebene, deren Schnittlinie mit dem Target 5 die bildfenster- oder bildröhrenfeste $y'$-Richtung bestimmt, die senkrecht zur $x'$-Richtung verläuft. Eine Spannung am zweiten Ablenkspulenpaar 8 hat eine Ablenkung des Abtaststrahls in $y'$-Richtung zur Folge. Das erste Ablenkspulenpaar 6 ist mit einem $x'$-Ablenkverstärker 10 verbunden. Das zweite Ablenkspulenpaar 8 ist mit einem $y'$-Ablenkverstärker 11 verbunden. Die Ablenkverstärker 10, 11 erhalten ihre Eingangsspannungen von einem Ablenksystem 12, der einen ersten Ablenkgenerator 40, 44 zur periodischen Abgabe eines Zeilenablenksignals, d.h. zur Ablenkung in der rasterfesten x-Richtung, und einen zweiten Ablenkgenerator 42, 46 zur Abgabe eines Zeilenfortschaltsignals, d.h. einer Ablenkung in der rasterfesten y-Richtung, enthält. Über eine Schnittstelle 13 (Interface) ist ein Speicher 14 an das Ablenksystem 12 angekoppelt.

Das vom ersten Ablenkgenerator 40, 44 Zeilenablenksignal besitzt einen zeitlich periodischen Verlauf und nimmt innerhalb einer Periode von einem vorgegebenen unteren Amplitudenwert auf einen vorgegebenen oberen Amplitudenwert zu. Anschliessend springt die Amplitude auf den Anfangswert zurück und beginnt nach einer vorgegebenen Verzögerungszeit, die zum Rücklauf des Abtaststrahls in seine Ausgangsstellung benötigt wird, erneut mit dem Anstieg. Eine Periode des Zeilenablenksignals lenkt den Abtaststrahl von einem vorgegebenen Anfangspunkt in x-Richtung bis zu einem vorgegebenen Endpunkt. Jedesmal, wenn das Zeilenablenksignal den Amplitudenendwert erreicht, triggert der erste Ablenkgenerator 40, 44 den zweiten Ablenkgenerator 42, 46 und dessen abgegebenes Zeilenfortschaltsignal wird daraufhin um einen vorgegebenen Wert inkrementiert, so dass der Abtaststrahl mit der nächsten Periode des Zeilenablenksignals eine zur vorausgegangenen Zeile parallele Zeile abtastet. Das Target 5 des Vidikons 1 wird dadurch vom Ablenksystem 12 in einem zeilensequentiell durchlaufenen Raster abgetastet.

Am Ausgang des Targets 5 wird ein Videosignal abgegeben, dessen zeitliche Änderung der Amplitude der abgetasteten Kontrastfolge entspricht. Werden auf den Kennzeichnungen, die auf das Bildfenster aufgelegt werden, lediglich Schwarz-Weiss-Kontrastfolgen verwendet, so entspricht das Videosignal im wesentlichen einem binären Signal, dessen erste Amplitude der Farbe Schwarz, und dessen zweite Amplitude der Farbe Weiss entspricht. Das Videosignal wird einem Videoverstärker 22 zugeführt, dessen Ausgang mit einem Analog/Digitalwandler 24 verbunden ist. Der Analog/Digitalwandler 24 ordnet die im Videosignal enthaltenen Amplituden eindeutig mindestens zwei vorgegebenen Amplituden, nämlich der Amplitude «Schwarz» und der Amplitude «Weiss», die z.B. durch den binären Wert «1» bzw. «0» gegeben sind. Es lassen sich auch Analog/Digitalwandler einsetzen, die auch Zwischenwerte der Amplitude des Videosignals vorgegebenen Digitalwerten zuordnen, wodurch auch Grautöne innerhalb der kontrastierenden optischen Zeichen erkannt und anschliessend der Amplitude «Schwarz» bzw. der Amplitude «Weiss» zugeordnet werden. Der Ausgang des Analog/Digitalwandlers 24 ist mit einem Interface 26 verbunden, das die Schnittstelle zu einem Dekodierer 28 bildet, der bei Verwendung von OCR-Klarschrift das digitale Eingangssignal so dekodiert, dass die im digitalen Eingangssignal enthaltene Kontrastzeichen-Information erkannt und an der Ausgabe 30 als digital kodiertes Ausgabesignal z.B. an einen Zeichendrucker oder eine Anzeigevorrichtung abgegeben wird.

Der Ausgang des Videoverstärkers 22 ist mit einem PIC-Dekoder 16 verbunden, um beim Abtasten jeder Rasterzeile feststellen zu können, ob ein PIC-Muster vom Abtaststrahl überlaufen wurde. Bei Vorhandensein und dem Erkennen des PIC-Musters gibt der PIC-Dekoder 16 ein Ausgangssignal «PIC OUT» an das Ablenksystem 12 ab, das daraufhin einen neuen Verfahrensschritt einleitet. Nach einer vorgegebenen Zeit triggert der PIC-Dekoder 16 das Interface 26, welches den OCR-Dekodierer 28 in einen betriebsbereiten Zustand setzt, so dass das anschliessend eintreffende, digitalisierte Videosignal als OCR-Klarschrift dekodiert werden kann. Der PIC-Dekoder 16 erkennt verschiedene PIC-Muster, 74, 75, 76, vgl. Fig. 1 bis 4, und gibt bei Erkennung ein das betreffende PIC-Muster kennzeichnendes Erkennungssignal PIC OUT, PIC OUT I, PIC OUT II, usw., ab. Als PIC-Dekoder 16 lässt sich z.B. eine Schaltung nach Patentanmeldung P 2 915 732.2-53 verwenden.

Das in Fig. 5 dargestellte Schaltbild enthält ferner eine Steuerschaltung 18 mit einem Prozessor 20, der über eine Sammelleitung (Bus) 32 mit dem Interface 26, und dem Interface 13 sowie dem Speicher 14 verbunden ist und den Ablauf der einzelnen Verfahrensschritte steuert und die während des Verfahrens erforderlichen Rechenschritte durchführt.

Das Datenfeld erscheint in beliebiger Position und Orientierung auf dem Bildfenster 2. In einem ersten Verfahrensschritt, dem sogenannten Suchbetrieb, wird daher das Target 5 des Vidikons 1 in einem stationären Suchraster abgetastet und das oder die PIC-Muster von Rasterzeilen geschnitten und erkannt. Anschliessend wird im zweiten Verfahrensschritt, dem sogenannten Lesebetrieb, das Datenfeld in Richtung der Datenspuren in einem engzeiligen Raster abgetastet und die in den Datenspuren enthaltenen Zeichen gelesen und dekodiert.

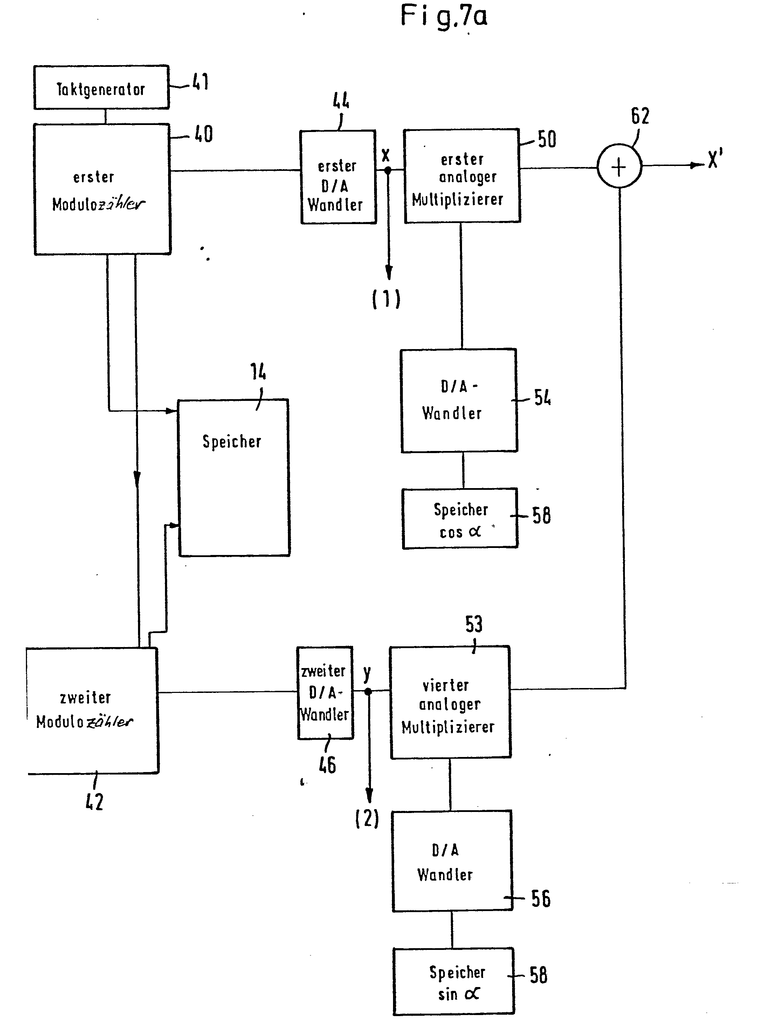

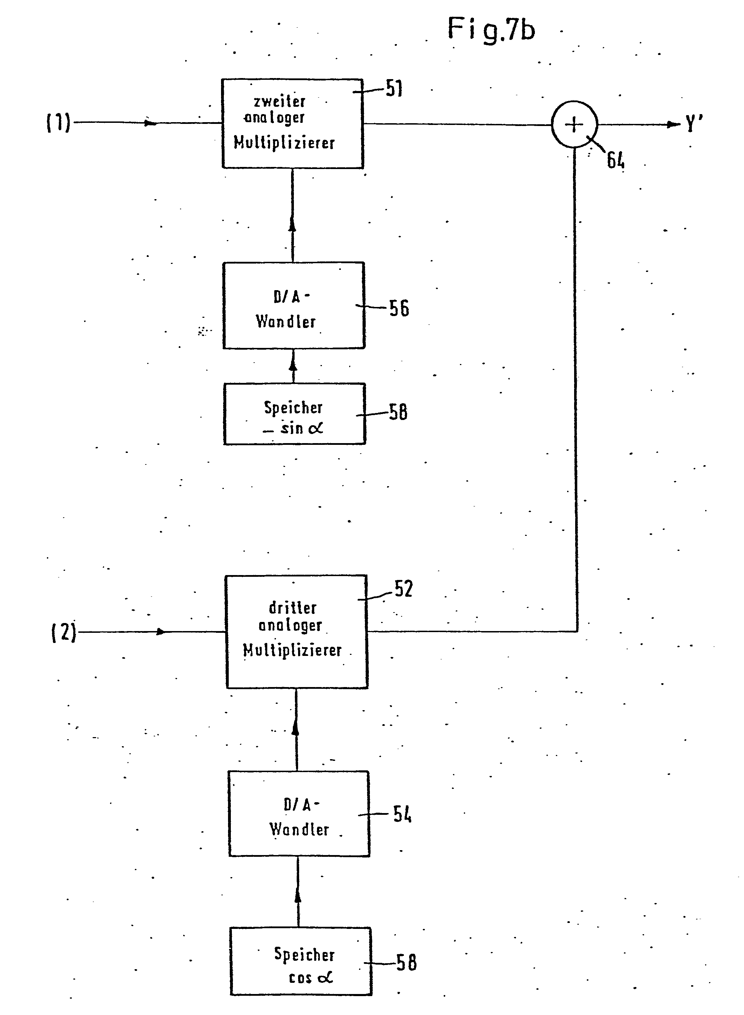

Um das Raster zur Durchführung des dritten Verfahrensschrittes elektronisch beliebig so drehen zu können, dass die Rasterzeilen parallel zu den Datenspuren liegen, enthält das Ablenksystem 12 eine Rasterdrehschaltung 50 bis 64, vgl. Fig. 7a, 7b, die das Zeilenablenksignal des ersten Ablenkgenerators 40, 44 sowie das Zeilenfortschaltsignal des zweiten Generators 42, 46 derart gewichtet und miteinander verknüpft, dass den Ablenkspulenpaaren 6, 8 ein Signalspiel zugeführt wird, das gegenüber dem bildröhrenfesten $x'$-, $y'$-Koordinatensystem um einen gewünschten Winkel $\varphi$ gedreht ist.

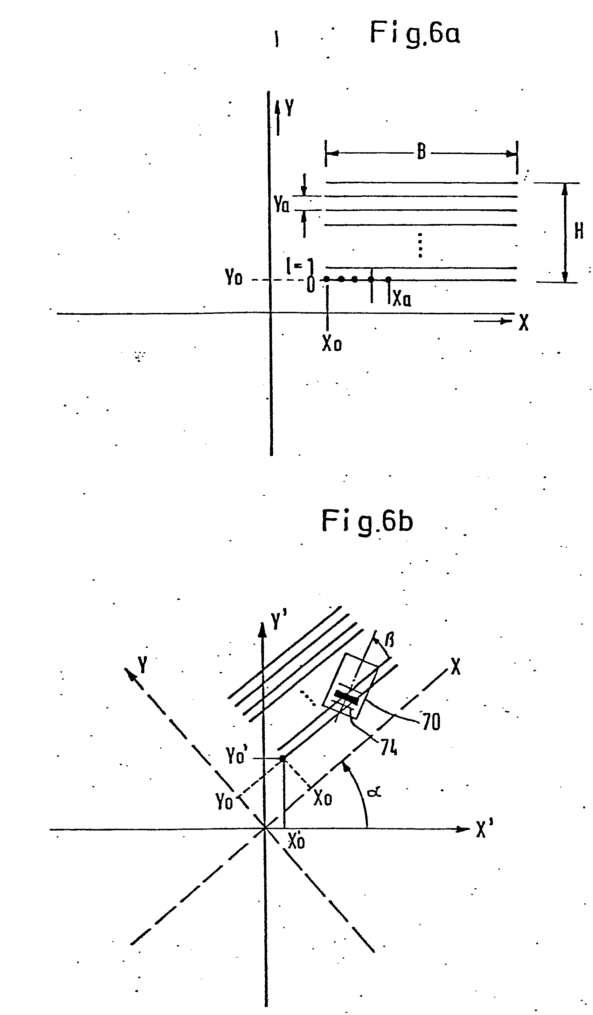

Fig. 6a zeigt eine schematische Darstellung eines Rasters, im rasterfesten x, y-Koordinatensystem. Das umgedrehte Raster fällt mit den $x'$- und $y'$-Richtungen des röhrenfesten Koordinatensystems zusammen und wird durch das Zeilenablenksignal des ersten Ablenkgenerators 40, 44 sowie das Zeilenfortschaltsignal des zweiten Generators erzeugt. Das Raster beginnt – vgl. Fig. 6a in dem System x, y – bei den Anfangskoordinaten $x_o$, $y_o$. Der Zeilenabstand lautet ya. Erfindungsgemäss werden die Rasterzeilen punktweise mit einem vorgegebenen Bildpunktabstand $x_a$ abgetastet. Der Drehwinkel, um den das Raster gegenüber den x-, y-Richtungen zu drehen ist, lautet $\varphi$. H bedeutet die Rasterhöhe, B die Rasterbreite, die gleich der Zeilenlänge ist. z ist die Zeilenzahl, und k (t) sowie l (t) geben die Inkrementierungs-Geschwindigkeiten an, mit denen die Rasterpunkte bzw. die einzelnen Rasterzeilen fortgeschaltet oder abgetastet werden. Das Raster lässt sich dann in der Form definieren:

$$x = x_o + x_a k(t) \qquad (1)$$

$$y = y_o + y_a l(t) \qquad (2)$$

$$y_a = H/(z-1) \qquad (3)$$

$$x_a = B/k_{max} \qquad (4)$$

wobei

$$0 \leq l(t) \leq (z-1)$$

$$0 \leq k(t) \leq k_{max}$$

Um das durch die Gleichungen (1) und (2) definierte Raster um einen vorgegebenen Drehwinkel $\varphi$ zu drehen, sind die Koordinaten x, y entsprechend den bekannten mathematischen Formeln für eine Drehung eines Koordinatensystems in folgender Weise zu gewichten und zu verknüpfen:

$$x' = x \cos\varphi + y \sin\varphi \qquad (5)$$

$$y' = -x \sin\varphi + y \cos\varphi \qquad (6)$$

d.h., die Koordinaten x, y erscheinen nach Drehung des x-, y-Koordinatensystems als Koordinaten x', y' in einem nicht gedrehten, bildröhren- oder bildfensterfesten x', y'-Koordinatensystem, vgl. Fig. 6b.

Da die Ablenkspannungen, die zur Erzeugung des Abtastrasters an die Ablenkspulenpaare 6, 8 angelegt werden, proportional zu der Auslenkung des Abtaststrahls, d.h. proportional zu den Koordinaten des aktuell abgetasteten Rasterpunkts sind, entspricht das in den Gleichungen (5) und (6) definierte, im bildröhrenfesten x', y'-Koordinatensystem gedrehte Raster dem Ablenksignal-Raster bis auf einen Proportionalitätsfaktor K, der für die beiden Ablenkspulenpaare 6, 8 identisch festgelegt ist und der Einfachheit halber den Wert 1 besitzen soll. Die Raster gemäss den Gleichungen (1) und (2) bzw. (5) und (6) stellen somit entweder Koordinaten des Abtast-Rasters oder Amplituden-Koordinaten des entsprechenden Ablenksignal-Rasters dar.

In den Fig. 7a und 7b ist ein Blockschaltbild für das erfindungsgemässe Ablenksystem 12 zur Erzeugung eines gemäss Gleichungen (5) und (6) gedrehten Rasters dargestellt, wobei das Ablenksystem aufgrund seines Aufbaus auch in vorteilhafter Weise die genaue Bestimmung des Schnittwinkels ermöglicht, unter dem die Rasterzeilen ein identifiziertes PIC-Muster schneiden.

Nach Fig. 7a und 7b enthält das Ablenksystem 12, wie schon in Verbindung mit Fig. 5 erläutert, einen ersten Ablenkgenerator 40, 44 zur periodischen Abgabe eines Zeilenablenksignals zur Ablenkung in der rasterfesten x-Richtung, und einen zweiten Ablenkgenerator 42, 46 zur Abgabe eines Zeilenfortschaltsignals, das die Zeilenfortschaltung in der rasterfesten y-Richtung verwirklicht. Das Ablenksystem enthält ferner eine Rasterdrehschaltung 50 bis 64, welche die Ausgangssignale des ersten und des zweiten Ablenkgenerators entsprechend dem gewünschten Drehwinkel gewichtet und verknüpft und dann an die Ablenkspulenpaare 6, 8 abgibt.

Der erste Ablenkgenerator 40, 44 enthält einen ersten Modulo-Zähler 40 mit vorgegebenem Zähltakt und einem vorgegebenen maximalen Zählintervall. Der Zählerstand des ersten Modulo-Zählers 40 wird von einem ersten Digital/Analogwandler 44 in ein mit dem Zählerstand proportional inkrementierendes Zeilenablenksignal zur punktweisen Abtastung der Rasterzeilen umgewandelt und anschliessend der Rasterdrehschaltung 50 bis 64 zugeführt. Das maximale Zählintervall entspricht der maximal möglichen Anzahl an Rasterpunkten $k_{max}$ innerhalb jeder Rasterzeile. Aufeinanderfolgende Zählwerte entsprechen benachbarten Rasterpunkten.

Der zweite Ablenkgenerator 42, 46 enthält einen zweiten Modulo-Zähler 42, dessen Zählerstand an der oberen Grenze des Zählintervalls des ersten Modulo-Zählers 40 um einen vorgegebenen Wert inkrementiert wird und von einem zweiten Digital/Analogwandler in ein mit dem Zählerstand proportional inkrementierendes Zeilenfortschaltsignal umgewandelt und der Rasterdrehschaltung sowie der Steuerschaltung 18 zugeführt wird.

Die Steuerschaltung 18 ist ebenfalls mit dem ersten Modulo-Zähler 40 verbunden und startet diesen Zähler 40 jeweils nach jeder Inkrementierung des zweiten Modulo-Zählers 42 neu. Das maximale Zählintervall des zweiten Modulo-Zählers 42 entspricht der maximal möglichen Anzahl $z_{max}$ an Rasterzeilen. Aufeinanderfolgende Zählwerte sind über das Zeilenfortschaltsignal benachbarten Zeilen zugeordnet.

Die obere und die untere Grenze des Zählintervalls des ersten Modulo-Zählers 40 sowie des zweiten Modulo-Zählers 42 sind entsprechend dem bei der Target-Abtastung gewünschten Anfang und Ende der Rasterzeilen, bzw. der gewünschten Anzahl an abgetasteten Zeilen einstellbar. Ebenfalls ist das Inkrement innerhalb des Zählintervalls des ersten und des zweiten Modulo-Zählers 40, 42 einstellbar, um den Abstand benachbarter Rasterpunkte bzw. benachbarter Rasterzeilen variieren zu können.

Im ersten Verfahrensschritt der vorliegenden Schaltung wird das Bildfenster 2 bzw. das Target 5 des Vidikons 1 mit einem stationären Suchraster abgetastet, um die PIC-Muster aufzufinden. In den Speicher 14 werden dabei die aktuellen Zählerstände des ersten und des zweiten Modulo-Zählers 40, 42 als rasterfeste Zählkoordinaten eingelesen, wenn eine Rasterzeile ein PIC-Muster schneidet und der PIC-Dekoder 16 das PIC-Muster erkennt und ein Erkennungssignal PIC OUT, bzw. PIC OUT I, PIC OUT II abgibt, das zur Identifizierung der Art des gerade erkannten PIC-Musters zusammen mit den betreffenden Zählkoordinaten in den Speicher 14 eingelesen wird. Die Einlesung erfolgt durch Abgabe eines Steuerimpulses an das das erkannte PIC-Muster charakterisierende binäre Interface 13 von der Steuerschaltung 18.

Nach Erreichen der oberen Intervallgrenze des zweiten Modulo-Zählers 42 und nach dem dadurch ausgelösten letzten Durchlauf des ersten Modulo-Zählers 40 wird der erste Modulo-Zähler 40 erneut für einen Durchlauf des Suchrasters gestartet, wenn beim letzten Durchlauf das PIC-Muster weniger als zweimal erkannt wurde und die zugehörigen Zählkoordinaten im Speicher 14 abgespeichert sind.

Die Steuerschaltung 18 enthält einen Prozessor 20, der aus den gespeicherten Zählkoordinaten $x_p$, $y_p$ der Schnittstellen den Schnittwinkel $\beta$ zwischen den das PIC-Muster schneidenden Rasterzeilen und den Datenspuren des Datenfelds berechnet, vgl. Fig. 6b.

Anschliessend wird der erste und der zweite Modulo-Zähler 40, 42 für einen Durchlauf des Rasters mit geringem Zeilenabstand gestartet, bei dem das erzeugte Leseraster in der Rasterdrehschaltung 50 bis 64 um den Schnittwinkel $\beta$ gedreht wird.

Der erste Modulo-Zähler 40 wird von einem Taktgenerator 41 mit einer vorgebbaren Taktfrequenz inkrementiert, während der zweite Modulo-Zähler 42 jeweils am Ende des Zählintervalls vom ersten Modulo-Zähler 40 getriggert und inkrementiert wird.

Das Inkrement des ersten und des zweiten Digital/Analogwandlers 44, 46 ist einstellbar, so dass die Zunahme des Zeilenablenksignals bzw. des Zeilenfortschaltsignals bei der Inkrementierung des ersten bzw. des zweiten Modulo-Zählers 40, 42 festgelegt werden kann.

Die Rasterdrehschaltung 50 bis 64 enthält einen Festwertspeicher ROM, 58, zur Speicherung der Kosinus- und der Sinuswerte sowie der negativen Sinuswerte aller möglicher Drehwinkel in Form einer Tabelle. Der Ausgang des Festwertspeichers 58 enthält einen Digital/Analogwandler 54, 56, der die digital gespeicherten Kosinus- und Sinuswerte in ein Analogsignal umwandelt. Der Ausgang des Digital/Analogwandlers 54, 56 wird einem ersten und einem zweiten analogen Multiplizierer 50, 51 zugeführt, der vom Digital/Analogwandler 44 auch das Zeilenablenksignal in analoger Form erhält. Im ersten bzw. im zweiten Multiplizierer 50, 51 erfolgt eine Multiplikation des Zeilenablenksignals mit dem Kosinus- bzw. dem negativen Sinuswert des Schnittwinkels. Die Rasterdrehschaltung enthält ferner einen dritten und einen vierten analogen Multiplizierer 52, 53, dem aus dem Festwertspeicher 58 der Kosinus- bzw. der Sinuswert des Schnittwinkels, und von dem Digital/Analogwandler 46 jeweils das Zeilenfortschaltsignal in analoger Form zugeführt wird.

Der Ausgang des ersten und des vierten Multiplizierers 50, 53 wird in einem ersten Addierglied 62 addiert. Der Ausgang des zweiten und des dritten Multiplizierers 51, 52 wird in einem zweiten Addierglied 64 addiert. Anschliessend wird der Ausgang der Addierglieder mit je einem Ablenkspulenpaar 6, 8 des Vidikons verbunden.

Das rasterfeste Zeilenablenksignal x und das rasterfeste Zeilenfortschaltsignal y wird auf diese Weise in der Rasterdrehschaltung 50 bis 64 gemäss den Gleichungen (5) und (6) verknüpft und gewichtet, so dass die den Ablenkspulenpaaren 6, 8 zugeführten Signale einem um den Schnittwinkel $\beta$ gedrehten Abtast-Raster entsprechen und ein solches Abtast-Raster erzeugen.

Der Digital/Analogwandler 44, der zur Verwirklichung des ersten Ablenkgenerators 40, 44 dem ersten Modulo-Zähler 40 nachgeschaltet ist, ist bevorzugt so aufgebaut, dass er an seinem Analogausgang ein dem Zählerstand zeitproportional, d.h. stufenweise inkrementierendes Zeilenablenksignal abgibt, welches zur punktweisen Abtastung der Rasterzeilen dient. Die punktweise Abtastung in Zeilenrichtung besitzt den Vorteil, dass pro abgetastetem Rasterpunkt eine relativ lange Verweilzeit möglich ist. Sofern jedoch durch die stufenförmigen Anstiegsflanken des Zeilen-Abtastsignals Störungen in der Gesamtschaltung zu befürchten sind – z.B. weil einzelne Baugruppen der Gesamtschaltung ein beschränktes Übertragungs-Frequenzband besitzen – so kann der Digital/Analogwandler 44 alternativ ein mit dem Zählerstand zeitproportional inkrementierendes Analogsignal abgeben, dessen Stufen z.B. durch Einfügen eines Tiefpasses abgeschrägt sind. Alternativ kann der Digital/Analogwandler ein entsprechend dem Zählerstand stetig zunehmendes Analogsignal als Zeilenablenksignal abgeben. Ein derartiger Digital/Analogwandler 44 lässt sich z.B. als Rampengenerator ausbilden, der vom ersten Modulo-Zähler 40 zu Beginn der abzutastenden Zeile gestartet und am Ende der Zeile gestoppt wird.

In den Fig. 8 bis 10 ist in vorgegebener Position und Orientierung zur Datenspur ein PIC-Muster 74 angeordnet, das mehrere parallele Kontrastlinien mit unterschiedlichem Abstand und/oder Linienbreiten besitzt. Das PIC-Muster ist gemäss Fig. 8 vor der Datenspur, gemäss Fig. 9 unter der Datenspur, gemäss Fig. 10 am Ende der beiden Datenspuren 71 angeordnet. Gemäss Fig. 11 sind zwei PIC-Muster 74 am Anfang und am Ende einer Datenspur 71 angebracht. Das PIC-Muster 74 ist senkrecht zu den Kontrastlinien asymmetrisch ausgebildet, um das Datenfeld hinsichtlich Beginn und Ende der Datenspuren zu kennzeichnen. Die in den Fig. 8 bis 11 dargestellten PIC-Muster besitzen eine zeichenfreie Vorlaufzone 77 und eine zeichenfreie Nachlaufzone 78.

Obwohl nur PIC-Muster mit jeweils drei Linien dargestellt sind, lassen sich auch PIC-Muster mit mehr als drei Linien verwenden. Ferner lassen sich die PIC-Muster – abweichend von den Fig. 8 bis 11 – auch in anderer Position und anderer Orientierung bezüglich der Datenspuren anbringen. Wesentlich ist dabei, dass die Position und Orientierung des PIC-Musters relativ zu den Datenspuren und zu den Kanten der Kennzeichnung 70 bekannt sind.

Das Bildfenster wird optisch auf das Target 5 des Vidikons 3 abgebildet, vgl. Fig. 5. Anschliessend wird bei den PIC-Mustern gemäss Fig. 8 bis 11 wie in Fig. 8 dargestellt, das Target unter einem Suchwinkel $\alpha$ abgetastet, oder schrittweise solange um Suchwinkelschritte $\Delta\alpha$ verändert, bis mehrere parallele Rasterzeilen das PIC-Muster schneiden. Der Schnittwinkel $\beta$ zwischen der(n) Datenspur(en) und den Rasterzeilen des Suchrasters ergibt – vorzeichenrichtig addiert – zusammen mit dem Suchwinkel α (der gleich einem oder mehreren Suchwinkelschritten Δα ist) denjenigen Winkel, um den das Raster aus seiner Ausgangslage gedreht werden muss, um das Datenfeld parallel zu den Datenspuren 71 – im Leseschritt – abzutasten, vgl. Fig. 8.

Zum Lesen und Abtasten der Datenfelder gemäss den Fig. 8 bis 11 wird ebenfalls die Vorrichtung gemäss den Fig. 5 bis 7b verwendet.

## Patentansprüche

1. Verfahren zum Identifizieren von Gegenständen, die in beliebiger Position und Orientierung und zu beliebigen Zeiten vor einem Bildfenster erscheinen und auf einer dem Bildfenster zugewandten Oberfläche eine Kennzeichnung (70) in Form eines Datenfeldes aufweisen, das in mindestens einer Datenspur (71) kontrastierende Zeichen (72) und mehrere vorgegebene Kontrastlinienmuster (76) umfasst, welche die Position und die Orientierung der Datenspur(en) (71) kennzeichnen und mehrere Linien mit unterschiedlichem Abstand und/oder Linienbreiten enthalten, bei dem das Bildfenster über eine opto-elektronische Wandlung zeilensequentiell abgetastet wird und ein der abgetasteten Kontrastfolge entsprechendes Videosignal erzeugt wird, wobei das Bildfenster im ersten Verfahrensschritt mit einem stationären Suchraster (80) abgetastet wird und bei Erkennen der einzelnen Kontrastlinienmuster (76) deren Position oder Orientierung innerhalb des Suchrasters (80) ermittelt wird, im zweiten Verfahrensschritt der Schnittwinkel β zwischen der(n) Datenspur(en) (71) und den Rasterzeilen des Suchrasters (80) bestimmt wird und im dritten Verfahrensschritt, im Lesebetrieb, das Datenfeld (70) in Richtung der Datenspur(en) in einem um den Schnittwinkel β gegenüber dem Suchraster (80) gedrehten Leseraster abgetastet wird und die in der(n) Datenspur(en) (71) enthaltenen Zeichen (72) gelesen und dekodiert werden, wobei ein Zeilenfortschaltsignal die aktuelle Rasterzeile, und ein Zeilenablenksignal die abgetastete Strecke innerhalb der aktuellen Rasterzeile festlegt, dadurch gekennzeichnet, dass

a) jedes Kontrastlinienmuster (76) aus in sich geschlossenen konzentrischen Linien besteht,

b) das Zeilenfortschaltsignal und das Zeilenablenksignal von digitalen Signalen abgeleitet werden, die während jedes Rasterdurchlaufs ausgezählt werden und als erster und zweiter Zählwert verfügbar sind, welche die jeweils schon abgetastete Rasterzeile bzw. die abgetastete Strecke innerhalb der aktuellen Rasterzeile kennzeichnen und die Zählkoordinaten (x, y) des aktuell abgetasteten Rasterpunkts in einem entsprechenden rasterfesten Zählkoordinatensystem darstellen,

c) dass während des Durchlaufs des Suchrasters (80) jeweils die den Schnittpunkten zwischen Rasterzeilen und Kontrastlinienmuster (76) entsprechenden Zählkoordinaten $(x_p, y_p)$ gespeichert werden, wenn das betreffende Kontrastlinienmuster gleichzeitig erkannt wird, und

d) dass im zweiten Verfahrensschritt aus den gespeicherten Zählkoordinaten $(x_p, y_p)$ die auf das Suchraster (80) bezogenen Zentrumskoordinaten $(x_z, y_z)$ der Kontrastlinienmuster (76), und aus diesen Zentrumskoordinaten $(x_z, y_z)$ der Schnittwinkel β zwischen den Rasterzeilen (80) des Suchrasters und der(n) Datenspur(en) (71) des Datenfelds berechnet wird.

2. Verfahren nach Anspruch 1, dadurch gekennzeichnet, dass die Rasterzeilen des Suchrasters und des Leserasters punktweise abgetastet werden.

3. Verfahren nach Anspruch 1 oder 2, dadurch gekennzeichnet, dass die Kontrastlinienmuster aus konzentrischen Kreislinien bestehen.

4. Verfahren nach Anspruch 1, 2 oder 3, dadurch gekennzeichnet, dass die Position der Kontrastlinienmuster (PIC) die Grösse des Datenfeldes kennzeichnet.

5. Verfahren nach einem der vorstehenden Ansprüche, dadurch gekennzeichnet, dass das Raster im dritten Verfahrensschritt eine gegenüber dem Raster des ersten Verfahrensschritts erhöhte Dichte der Rasterzeilen besitzt.

6. Verfahren zum Identifizieren von Gegenständen, die in beliebiger Position und Orientierung und zu beliebigen Zeiten vor einem Bildfenster erscheinen und auf einer dem Bildfenster zugewandten Oberfläche eine Kennzeichnung (70) in Form eines Datenfeldes aufweisen, das in mindestens einer Datenspur (71) kontrastierende Zeichen und mehrere Kontrastlinienmuster (PIC; 74; 74a, 75) umfasst, welches die Position und die Orientierung der Datenspur(en) kennzeichnen und mehrere parallele Linien mit unterschiedlichem Abstand und/oder unterschiedliche Linienbreiten enthalten, bei dem das Bildfenster über eine opto-elektronische Wandlung zeilensequentiell abgetastet wird und ein der abgetasteten Kontrastfolge entsprechendes Videosignal erzeugt wird, wobei das Bildfenster im ersten Verfahrensschritt mit einem stationären Suchraster abgetastet wird und bei Erkennen der einzelnen Kontrastlinienmuster deren Position oder Orientierung innerhalb des Suchrasters ermittelt wird, im zweiten Verfahrensschritt der Schnittwinkel β zwischen der(n) Datenspur(en) und den Rasterzeilen des Suchrasters bestimmt wird und im dritten Verfahrensschritt, im Lesebetrieb, das Datenfeld in Richtung der Datenspur(en) in einem um den Schnittwinkel β gegenüber dem Suchraster gedrehten Leseraster abgetastet wird und die in der(n) Datenspur(en) enthaltenen Zeichen gelesen und dekodiert werden, wobei ein Zeilenfortschaltsignal die aktuelle Rasterzeile, und ein Zeilenablenksignal die abgetastete Strecke innerhalb der aktuellen Rasterzeile festlegt, dadurch gekennzeichnet,

a) dass das Kontrastlinienmuster erster Art (74) mit einer ersten Linien/Abstandsfolge in einer ersten Richtung, und Kontrastlinienmuster zweiter Art (75) mit einer zweiten Linien/Abstandsfolge in einer zweiten Richtung auf dem Datenfeld aufgebracht werden,

b) dass das Zeilenfortschaltsignal und das Zeilenablenksignal von digitalen Signalen abgeleitet werden, die während jedes Rasterdurchlaufs ausgezählt werden und als erster und zweiter Zählwert verfügbar sind, welche die jeweils schon abgetastete Rasterzeile bzw. die abgetastete Strecke innerhalb der aktuellen Rasterzeile kennzeichnen und die Zählkoordinaten (x, y) des aktuell abgetasteten Rasterpunkts in einem entsprechenden rasterfesten Zählkoordinatensystem darstellen,

c) dass während des Durchlaufs des Suchrasters die dem jeweiligen Schnittpunkt zwischen Rasterzeilen und Kontrastlinienmuster entsprechenden Zählkoordinaten $(x_p, y_p)$ gespeichert werden, wenn das betreffende Kontrastlinienmuster (PIC) gleichzeitig erkannt wird, und

d) dass im zweiten Verfahrensschritt aus den gespeicherten Zählkoordinaten $(x_p, y_p)$ der Schnittwinkel β zwischen den Rasterzeilen des Suchrasters und der(n) Datenspur(en) des Datenfelds berechnet wird.

7. Verfahren nach Anspruch 6, dadurch gekennzeichnet, dass die Rasterzeilen des Suchrasters und des Leserasters punktweise abgetastet werden.

8. Verfahren nach Anspruch 6 oder 7, dadurch gekennzeichnet, dass die Kontrastlinienmuster erster Art (74) senkrecht zu der(n) Datenspur(en) (71) des Datenfelds laufen, und dass die Kontrastlinienmuster zweiter Art (75) parallel zu der(n) Datenspur(en) verlaufen.

9. Verfahren nach Anspruch 8, dadurch gekennzeichnet, dass die Kontrastlinienmuster erster und zweiter Art (74, 75) abwechselnd in einer Kontrastlinienmuster-Spur (73a) angeordnet werden, deren Orientierung relativ zu der(n) Datenspur(en) (71) bekannt ist, dass der Abstand benachbarter Rasterzeilen im Suchraster (80) so klein gewählt ist, dass jedes Kontrastlinienmuster erster oder zweiter Art (74, 75) bei Durchlauf des Suchrasters (80) mindestens einmal geschnitten wird, und dass aus den gespeicherten Zählkoordinaten $(x_p, y_p)$ der Schnittwinkel β zwischen den Rasterzeilen des Suchrasters und der(n) Datenspur(en) des Datenfelds nur berechnet wird, wenn mindestens alle Kontrastlinienmuster erster Art (74) oder alle Kontrastlinienmuster zweiter Art (75) innerhalb der Kontrastlinienmuster-Spur unter einem vorgegebenen Mindest-Schnittwinkel geschnitten werden.

10. Verfahren nach einem der Ansprüche 6 bis 9, dadurch gekennzeichnet, dass das Raster im dritten Verfahrensschritt eine gegenüber dem Raster des ersten Verfahrensschritts erhöhte Dichte der Rasterzeilen besitzt.

11. Verfahren zum Identifizieren von Gegenständen, die in beliebiger Position und Orientierung und zu beliebigen Zeiten vor einem Bildfenster erscheinen und auf einer dem Bildfenster zugewandten Oberfläche eine Kennzeichnung (70) in Form eines Datenfeldes aufweisen, das in mindestens einer Datenspur (71) kontrastierende Zeichen, und eine Kontrastlinienmusteranordnung umfasst, welche die Position und die Orientierung der Datenspur(en) (71) kennzeichnet und mehrere parallele Linien mit unterschiedlichem Abstand und/oder Linienbreiten enthält, bei dem das Bildfenster über eine opto-elektronische Wandlung zeilensequentiell abgetastet wird und ein der abgetasteten Kontrastfolge entsprechendes Videosignal erzeugt wird, wobei das Bildfenster im ersten Verfahrensschritt in einem relativ weitzeiligen Suchraster unter verschiedenen Suchwinkeln α so lange abgetastet wird, bis die Kontrastlinienmusteranordnung im letzten Rasterdurchlauf von mindestens zwei Rasterzeilen geschnitten und erkannt wird, im zweiten Verfahrensschritt die Position und Orientierung der Datenspur(en) (71) relativ zum Bildfenster bestimmt werden und im dritten Verfahrensschritt, im Lesebetrieb, das Datenfeld in Richtung der Datenspur(en) in einem engzeiligen Raster abgetastet wird und die in der(n) Datenspur(en) enthaltenen Zeichen gelesen und dekodiert werden, wobei ein Zeilenfortschaltsignal die aktuelle Rasterzeile, und ein Zeilenablenksignal die abgetastete Strecke innerhalb der aktuellen Rasterzeile festlegt, dadurch gekennzeichnet,

a) dass die Rasterzeilen des Rasters punktweise abgetastet werden,

b) dass das Zeilenfortschaltsignal und das Zeilenablenksignal von digitalen Signalen abgeleitet werden, die während jedes Rasterdurchlaufs ausgezählt werden und als erster und zweiter Zählwert verfügbar sind, welche die jeweils schon abgetastete Rasterzeile bzw. die abgetastete Strecke innerhalb der aktuellen Rasterzeile kennzeichnen und die Zählkoordinaten (x, y) des aktuell abgetasteten Rasterpunkts in einem entsprechenden rasterfesten Zählkoordinatensystem darstellen,

c) dass während des letzten Rasterdurchlaufs des ersten Verfahrensschritts der eingestellte Suchwinkel ($α_l$) und die dem jeweiligen Schnittpunkt zwischen Rasterzeilen und Kontrastlinienmusteranordnung entsprechenden Zählkoordinaten $(x_p, y_p)$ gespeichert werden, wenn die Kontrastlinienmusteranordnung gleichzeitig erkannt wird,

d) dass im zweiten Verfahrensschritt aus den gespeicherten Zählkoordinaten $(x_p, y_p)$ der Schnittwinkel (β) zwischen den Rasterzeilen des letzten Suchbetriebs-Rasterdurchlaufs und der(n) Datenspur(en) des Datenfelds berechnet wird, und

e) dass im dritten Verfahrensschritt das engzeilige Raster unter einem Winkel durchlaufen wird, der gleich der Summe aus berechnetem Schnittwinkel (β) und dem zuletzt eingestellten Suchwinkel ($α_l$) ist und die kontrastierenden Zeichen in der(n) Datenspur(en) ausgelesen werden.

12. Verfahren nach Anspruch 11, dadurch gekennzeichnet, dass die Länge und/oder Position der Kontrastlinienmusteranordnung die Grösse des Datenfeldes kennzeichnet, dass der Abstand benachbarter Rasterzeilen im ersten Verfahrensschritt so klein gegen die Länge der Kontrastlinienmusteranordnung ist, dass eine Vielzahl von Rasterzeilen die Kontrastlinienmusteranordnung bei deren Erkennung schneidet, dass aus den am Ende des ersten Verfahrensschritts gespeicherten Zählkoordinaten (x, y), die den Schnittpunkten der ersten und der letzten, die Kontrastlinienmusteranordnung schneidenden Rasterzeilen entsprechen, die Grösse des Datenfelds im Zählkoordinatensystem des letzten Suchbetriebs-Rasters und anschliessend im Zählkoordinatensystem des Lesebetrieb-Rasters berechnet wird, und dass anschliessend das Lesebetrieb-Raster auf etwa die Grösse des Datenfelds begrenzt wird.

13. Vorrichtung zur Durchführung des Verfahrens nach einem der Ansprüche 11 oder 12, bei der das Bildfenster (2) auf das Target (5) eines Vidikons (1) abgebildet wird, welches von einem Ablenksystem (12) in einem zeilensequentiellen, elektronisch drehbaren Raster abgetastet wird und an seinem Ausgang ein elektrisches Videosignal abgibt, das dem zeilenweise abgetasteten Bildfeld entspricht und das Kontrastmuster der abgetasteten Zeilen sequentiell als binäre Amplitudenfolge wiedergibt, und mit einem PIC-Dekoder (16) zum Erkennen abgetasteter Kontrastlinienmuster (PIC), die die Position und die Orientierung der Datenspur(en) des Datenfelds kennzeichnen und mehrere Linien mit unterschiedlichem Abstand und/oder Linienbreiten enthalten, wobei das Ablenksystem (12) einen ersten Ablenkgenerator (40, 44) zur periodischen Abgabe eines Zeilenablenksignals (Ablenkung in x-Richtung), und einen zweiten Ablenkgenerator (42, 46) zur Abgabe eines Zeilenfortschaltsignals (Ablenkung in y-Richtung) am Ende jedes Zeilenablenksignals enthält, wobei die abgegebenen Signale eine Rasterdrehschaltung (50 bis 64) durchlaufen und dann dem gewünschten Drehwinkel entsprechend gewichtet und miteinander verknüpft zwei um 90° gegeneinander versetzte Ablenkspulenpaare od. dgl. aussteuern, deren Magnetfeld den Abtaststrahl des Vidikons (1) in einem entsprechend gedrehten Raster ablenkt, dadurch gekennzeichnet,

a) dass der PIC-Dekoder (16) eines oder mehrere verschiedene Kontrastlinienmuster (PIC I, PIC II, ..) erkennt und bei einer Erkennung ein das betreffende Kontrastlinienmuster kennzeichnendes Erkennungssignal (PIC OUT I, PIC OUT II, ...) abgibt,

b) dass der erste Ablenkgenerator (40, 44) einen ersten Modulo-Zähler (40) mit vorgegebenem Zähltakt und maximalem Zählintervall enthält, dessen Zählerstand von einem ersten Digital/Analogwandler (44) in ein proportional zum Zählerstand stetig oder stufenweise inkrementierendes Zeilenablenksignal umgewandelt und der Rasterdrehschaltung (50 bis 64) zugeführt wird,

c) dass der zweite Ablenkgenerator (42, 46) einen zweiten Modulo-Zähler (42) enthält, dessen Zählerstand an der oberen Grenze des Zählintervalls des ersten Modulo-Zählers (40) um einen gegebenen Wert inkrementiert wird und von einem zweiten Digital/Analogwandler (46) in ein mit dem Zählerstand proportional inkrementierendes Zeilenfortschaltsignal umgewandelt und der Rasterdrehschaltung sowie einer Steuerschaltung (18) zugeführt wird, die eine vorgegebene Zeit nach jeder Inkrementierung des zweiten ModuloZählers (42) den ersten Modulo-Zähler (40) erneut startet,

d) dass die aktuellen Zählerstände des ersten und des zweiten Modulo-Zählers (40, 42) als rasterfeste Zählkoordinaten $(x_p, y_p)$ in einem Speicher (14) eingelesen werden, wenn eine Rasterzeile ein Kontrastlinienmuster (PIC I, PIC II) schneidet und der PIC-Dekoder (16) das Kontrastlinienmuster erkennt und ein Erkennungssignal (PIC OUT I, PIC OUT II) in den Speicher (14) abgibt,

e) dass die Steuerschaltung (18)

e.1) nach Durchlauf des Suchrasters die beiden Modulo-Zähler (40, 42) stoppt, wenn das oder die Kontrastlinienmuster (PIC) hinreichend oft erkannt und die zugehörigen Zählkoordinaten $(x_p, y_p)$ im Speicher (14) – indiziert mit dem dabei jeweils erkannten PIC-Muster (PIC I, PIC II ...) – abgespeichert sind,

e.2) jeweils nach Erreichen der oberen Intervallgrenze des zweiten Modulo-Zählers (42) und nach dem dadurch ausgelösten letzten Durchlauf des ersten Modulo-Zählers (40) den Suchwinkel $(\alpha)$ um einen vorgegebenen Winkelschritt $(\Delta\alpha)$ erhöht, im Speicher (14) abspeichert, und den ersten Modulo-Zähler (40) für einen neuen Rasterdurchlauf startet, wenn beim letzten Rasterdurchlauf das Kontrastlinienmuster (PIC) weniger als m-mal erkannt wurde $(m \geqslant 2)$,

f) dass die Steuerschaltung (18) einen Prozessor (20) enthält, der aus den gespeicherten Zählkoordinaten $(x_p, y_p)$ und der vorgegebenen Lage der zugehörigen PIC-Muster auf dem Datenfeld den Schnittwinkel $\beta$ zwischen den Rasterzeilen des Suchrasters und den Datenspuren des Datenfelds berechnet, und

g) dass anschliessend der erste und der zweite Ablenkgenerator (40, 44; 42, 46) für einen neuen Rasterdurchlauf gestartet werden, bei dem das erzeugte Leseraster in der Rasterdrehschaltung (50 bis 64) um einen Gesamtwinkel gedreht wird, der der Summe aus zuletzt gespeichertem Suchwinkel $(\alpha_l)$ und berechnetem Schnittwinkel $(\beta)$ entspricht.

14. Vorrichtung nach Anspruch 13, dadurch gekennzeichnet, dass die Steuerschaltung (18) softwaremässig vom Prozessor (20) verwirklicht ist.

15. Vorrichtung nach Anspruch 13 oder 14, dadurch gekennzeichnet, dass die obere und die untere Grenze des Zählintervalls des ersten Modulo-Zählers (40) entsprechend dem bei der Target-Abtastung gewünschten Anfang und Ende der Rasterzeilen einstellbar sind.

16. Vorrichtung nach einem der Ansprüche 13 bis 15, dadurch gekennzeichnet, dass die untere und die obere Grenze des Zählintervalls des zweiten Modulo-Zählers (42) entsprechend der bei der Target-Abtastung gewünschten abgetasteten Zeilengruppe einstellbar sind.

17. Vorrichtung nach einem der Ansprüche 13 bis 16, dadurch gekennzeichnet, dass das Inkrement innerhalb des Zählerintervalls des ersten und des zweiten Modulo-Zählers (40, 42) einstellbar ist.

18. Vorrichtung nach einem der Ansprüche 13 bis 16, dadurch gekennzeichnet, dass das Inkrement des ersten und des zweiten Digital/Analogwandlers (44, 46) für das abgegebene Zeilenablenksignal bzw. Zeilenfortschaltsignal einstellbar ist.

19. Vorrichtung nach einem der Ansprüche 13 bis 18, dadurch gekennzeichnet, dass die Rasterdrehschaltung (50 bis 64) einen Festwertspeicher (ROM, 58) zur Speicherung der Kosinus- und Sinuswerte aller möglichen Drehwinkel, und einen Digital/Analogwandler (54, 56) an jedem Ausgang des Festwertspeichers (58) einen ersten und einen zweiten analogen Multiplizierer (50, 51) zur Multiplikation des Zeilenablenksignals mit dem aus dem Festwertspeicher (58) ausgelesenen Kosinus- bzw. dem negativen Sinuswert des Drehwinkels, und einen dritten und vierten analogen Multiplizierer (52, 53) zur Multiplikation des Zeilenfortschaltsignals mit dem aus dem Festwertspeicher (58) ausgelesenen Kosinus- bzw. Sinuswert des Drehwinkels enthält, und dass der Ausgang des ersten und des vierten Multiplizierers (50, 53) in einem ersten Addierglied (62), und der Ausgang des zweiten und des dritten Multiplizierers (51, 52) in einem zweiten Addierglied (64) addiert werden, deren Ausgänge mit je einem der Ablenkspulenpaare (6, 8) verbunden ist.

20. Vorrichtung nach einem der Ansprüche 13 bis 19, dadurch gekennzeichnet, dass vor den Ablenkspulenpaaren (6, 8) je ein Tiefpass eingefügt ist.

## Claims

1. A method of identification of objects which appear in front of an image window in random positions and orientations and at random times and exhibit on a surface facing the image window an identification (70) in the form of a data field which comprises in at least one data track (71) contrasting symbols (72) and a number of predetermined contrasting line patterns (76) which characterize the position and the orientation of the data track or tracks (71) and contain a number of lines at different spacings and/or having different widths of the lines, in which method the image window gets scanned line by line via opto-electronic conversion and a video signal is generated to correspond with the scanned contrast sequence, where the image window is scanned in the first step of the method in a stationary detection raster (80) and upon recognition of the individual contrasting line patterns (76) their positions or orientations within the detection raster (80) are determined, in the second stop of the method the angle of intersection β between the data track or tracks (71) and the raster lines of the detection raster (80) is determined and in the third step of the method, in the reading mode, the data field (70) is scanned in the direction of the data track or tracks in a reading raster rotated with respect to the detection raster (80) by the angle of intersection β and the symbols (72) contained in the data track or tracks (71) get read and decoded, where a line advance signal determines the raster line at the time and a line deflection signal determines the scanned segment within the raster line at the time, characterized in that

a) each contrasting line pattern (76) consists of concentric lines closed upon themselves;

b) the line advance signal and the line deflection signal are derived from digital signals which during each sweep of the raster are counted out and are available as a first and a second numerical value which characterize respectively the rastor line already scanned and the scanned segment within the raster line at the time and form the numerical coordinates $(x, y)$ of the point on the raster being scanned at the time in a corresponding raster-constant numerical coordinate system;

c) during the sweep of the detection raster (80) the numerical coordinates $(x_p, y_p)$ corresponding with the points of intersection between raster lines and contrasting line patterns (76) are stored at any time when the contrasting line pattern concerned is simultaneously recognized; and

d) in the second step of the method the central coordinates $(x_z, y_z)$ of the contrasting line patterns (76) referred to the detection raster (80) are calculated from the stored numerical coordinates $(x_p, y_p)$, and from these central coordinates $(x_z, y_z)$ is calculated the angle of intersection β between the raster lines (80) of the detection raster and the data track or tracks (71) of the data field.

2. A method as in Claim 1, characterized in that the raster lines of the detection raster and of the reading raster are scanned point by point.

3. A method as in Claim 1 or 2, characterized in that the contrasting line patterns consist of concentric circles.

4. A method as in Claim 1, 2 or 3, characterized in that the position of the contrasting line pattern (PIC) characterizes the size of the data field.

5. A method as in one of the preceding Claims, characterized in that the raster in the third step of the method has with respect to the raster of the first step of the method increased density of the raster lines.

6. A method of identification of objects which appear in front of an image window in random positions and orientations and at random times and exhibit on a surface facing the image window an identification (70) in the form of a data field which comprises in at least one data track (71) contrasting symbols and a number of contrasting line patterns (PIC; 74; 74a; 75) which characterize the position and the orientation of the data track or tracks and contain a number of parallel lines at different spacings and/or having different widths of the lines, in which method the image window gets scanned line by line via opto-electronic conversion and a video signal is generated to correspond with the scanned contrast sequence, where the image window is scanned in the first step of the method in a stationary detection raster and upon recognition of the individual contrasting line patterns their positions or orientations within the detection raster are determined, in the second step of the method the angle of intersection β between the data track or tracks and the raster lines of the detection raster is determined and in the third step of the method, in the reading mode, the data field is scanned in the direction of the data track or tracks in a reading raster rotated with respect to the detection raster by the angle of intersection β and the symbols contained in the data track or tracks get read and decoded, where a line advance signal determines the raster line at the time and a line deflection signal determines the scanned segment within the raster line at the time, characterized in that

a) contrasting line patterns of a first kind (74) having a first line/spacing sequence in a first direction, and contrasting line patterns of a second kind (75) having a second line/spacing sequence in a second direction are applied to the data field;

b) the line advance signal and the line deflection signal are derived from digital signals which during each sweep of the raster are counted out and are available as a first and a second numerical value which characterize respectively the raster line already scanned and the scanned segment within the raster line at the time and form the numerical coordinates (x, y) of the point on the raster being scanned at the time in a corresponding raster-constant numerical coordinate system;

c) during the sweep of the detection raster the numerical coordinates $(x_p, y_p)$ corresponding with the point of intersection at the time between the raster lines and the contrasting line patterns are stored, when the contrasting line pattern (PIC) concerned is simultaneously recognized; and

d) in the second step of the method the angle of intersection (β) between the raster lines of the detection raster and the data track or tracks of the data field is calculated from the stored numerical coordinates $(x_p, y_p)$.

7. A method as in Claim 6, characterized in that the raster lines of the detection raster and of the reading raster are scanned point by point.

8. A method as in Claim 6 or 7, characterized in that the contrasting line patterns of the first kind (74) run perpendicular to the data track or tracks (71) of the data field, and that the contrasting line patterns of the second kind (75) run in parallel with the data track or tracks.

9. A method as in Claim 8, characterized in that the contrasting line patterns of the first and second kind (74, 75) are arranged alternately in a contrasting line pattern track (73a) the orientation of which relative to the data track or tracks (71) is known, that the spacing of adjacent raster lines in the detection raster (80) is chosen to be so small that every contrasting line pattern of the first or second kind (74, 75) gets intersected at least once during the sweep of the detection raster (80), and that from the stored numerical coordinates $(x_p, y_p)$ the angle of intersection β between the raster lines of the detection raster and the data track or tracks of the data field only gets calculated when at least all of the contrasting line patterns of the first kind (74) or all of the contrasting line patterns of the second kind (75) are intersected within the contrasting line pattern track at a predetermined minimum angle of intersection.

10. A method as in one of the Claims 6 to 9, characterized in that the raster in the third step of the method has with respect to the raster of the first step of the method increased density of the raster lines.

11. A method of identification of objects which appear in front of an image window in random positions and orientations and at random times and exhibit on a surface facing the image window an identification (70) in the form of a data field which comprises in at least one data track (71) contrasting symbols and a contrasting line pattern arrangement which characterizes the position and the orientation of the data track or tracks (71) and contains a number of parallel lines at different spacings and/or having different widths of the lines, in which method the image window gets scanned line by line via opto-electronic conversion and a video signal is generated to correspond with the scanned contrast sequence, where the image window is scanned in the first step of the method in a detection raster having relatively broad lines at different detection angles α until the contrasting line pattern arrangement in the last sweep of the raster gets intersected by at least two raster lines and recognized, in the second step of the method the position and orientation of the data track or tracks (71) relative to the image window are determined and in the third step of the method, in the reading mode, the data field is scanned in the direction of the data track or tracks in a raster having narrow lines and the symbols contained in the data track or tracks get read and decoded, where a line advance signal determines the raster line at the time and a line deflection signal determines the scanned segment within the raster line at the time, characterized in that

a) the raster lines of the raster are scanned point by point;

b) the line advance signal and the line deflection signal are derived from digital signals which during each sweep of the raster are counted out and are available as a first and a second numerical value which characterize respectively the raster line already scanned and the scanned segment within the raster line at the time and form the numerical coordinates (x, y) of the point on the raster being scanned at the time in a corresponding raster-constant numerical coordinate system;

c) during the last sweep of the raster of the first step of the method the set detection angle $(\alpha_i)$ and the numerical coordinates $(x_p, y_p)$ corresponding with the point of intersection at the time between the raster lines and the contrasting line pattern arrangement are stored, when the contrasting line pattern arrangement is simultaneously recognized;

d) in the second step of the method the angle of intersection (β) between the raster lines of the last sweep of the raster in the detection mode and the data track or tracks of the data field is calculated from the stored numerical coordinates $(x_p, y_p)$; and

14

e) in the third step of the method the narrow-lined raster is swept at an angle which is equal to the sum of the calculated angle of intersection ($\beta$) and the last set detection angle ($\alpha_l$) and the contrasting symbols are read out in the data track or tracks.

12. A method as in Claim 11, characterized in that the length and/or position of the contrasting line pattern arrangement characterizes the size of the data field, that the spacing of adjacent raster lines in the first step of the method is so small compared with the length of the contrasting line pattern arrangement that a plurality of raster lines intersects the contrasting line pattern arrangement during its recognition, that from the numerical coordinates (x, y) stored at the end of the first step of the method, which correspond with the points of intersection of the first and last raster lines intersecting the contrasting line pattern arrangement, the size of the data field in the numerical coordinate system of the last detection-mode raster and subsequently in the numerical coordinate system of the reading-mode raster is calculated, and that subsequently the reading-mode raster is restricted to about the size of the data field.

13. A device for the performance of the method as in one of the Claims 11 or 12, in which the image window (2) is formed on the target (5) of a vidicon (1) which is scanned by a deflection system (12) in a line-by-line electronically rotatable raster and emits at its output an electrical video signal which corresponds with the image field being scanned line by line and reproduces sequentially the contrasting pattern of the scanned lines as a binary amplitude sequence, and having a PIC decoder (16) for the recognition of scanned contrasting line patterns (PIC) which characterize the position and the orientation of the data track or tracks of the data field and contain a number of lines having different spacings and/or line widths, where the deflection system (12) contains a first deflection generator (40, 44) for the periodic emission of a line deflection signal (deflection in the x-direction) and a second deflection generator (42, 46) for the emission of a line advance signal (deflection in the y-direction) at the end of each line deflection signal, where the signals emitted pass through a raster rotation circuit (50 to 64) and then after having been weighted to correspond with the desired angle of rotation and coupled together, control two pairs of deflection coils or the like which are offset by 90° with respect to one another and the magnetic field from which deflects the scanning beam of the vidicon (1) in a correspondingly rotated raster, characterized in that

a) the PIC decoder (16) recognizes one or more different contrasting line patterns (PIC I, PIC II,...) and in the event of a recognition emits a recognition signal (PIC OUT I, PIC OUT II,...) characterizing the contrasting line pattern concerned;

b) the first deflection generator (40, 44) contains a first modulo-counter (40) having a predetermined counting cycle and a maximum counting interval, the count of which is converted by a first

digital/analogue converter (44) into a line deflection signal which increases incrementally continually or in steps in proportion to the count, and is fed to the raster rotation circuit (50 to 64);

c) the second deflection generator (42, 46) contains a second modulo-counter (42) the count of which is increased incrementally by a given amount at the upper boundary of the counting interval of the first modulo-counter (40) and converted by a second digital/analogue converter (46) into a line advance signal which increases incrementally in proportion to the count, and is fed to the raster rotation circuit as well as to a control circuit (18) which at a predetermined time after each incrementation of the second modulo-counter (42) starts up again the first modulo-counter (40);

d) the counts of the first and second modulo-counters (40, 42) at the time are read as raster-constant numerical coordinates $(x_p, y_p)$ into a store (14) when a raster line intersects a contrasting line pattern (PIC I, PIC II) and the PIC decoder (16) recognizes the contrasting line pattern and emits a recognition signal (PIC OUT I, PIC OUT II) into the store (14);

e) the control circuit (18)

e1) stops the two modulo-counters (40, 42) after the sweep of the detection raster when the contrasting line pattern or patterns (PIC) have been recognized sufficiently often and the associated numerical coordinates $(x_p, y_p)$ – indicated by the PIC pattern (PIC I, PIC II) recognized at the time in so doing – have been stored in the store (14);

e2) after respectively the upper boundary of the interval of the second modulo-counter (42) has been reached and after the last sweep of the first modulo-counter (40) has thereby been initiated, the control circuit (18) increases the detection angle ($\alpha$) by a predetermined angular increment ($\Delta\alpha$), stores it in the store (14) and starts up the first modulo-counter (40) for another sweep of the raster, if at the last sweep of the raster the contrasting line pattern (PIC) has been recognized less than m times ($m \geq 2$);

f) the control circuit (18) contains a processor (20) which from the stored numerical coordinates $(x_p, y_p)$ and the predetermined position of the associated PIC patterns on the data field calculates the angle of intersection $\beta$ between the raster lines of the detection raster and the data tracks of the data field; and

g) subsequently the first and second deflection generators (40, 44; 42, 46) are started up for another sweep of the raster, in which the reading raster generated in the raster rotation circuit (50 to 64) is rotated by a total angle which corresponds with the sum of the detection angle ($\alpha_l$) last stored and the calculated angle of intersection ($\beta$).

14. A device as in Claim 13, characterized in that the control circuit (18) is realized in the software of the processor (20).

15. A device as in Claim 13 or 14, characterized in that the upper and lower boundaries of the counting interval of the first modulo-counter (40) can be set to correspond with the start and end of the raster lines as desired in the scanning of the target.

16. A device as in one of the Claims 13 to 15, characterized in that the lower and upper boundaries of the counting interval of the second modulo-counter (42) can be set to correspond with the group of lines being scanned as desired in the scanning of the target.

17. A device as in one of the Claims 13 to 16, characterized in that the increment can be set within the counting interval of the first and second modulo-counters (40, 42).

18. A device as in one of the Claims 13 to 16, characterized in that the increment of the first and second digital/analogue converters (44, 46) can be set for the line deflection signal or respectively the line advance signal emitted.

19. A device as in one of the Claims 13 to 18, characterized in that the raster rotation circuit (50 to 64) contains a constant-values store (ROM, 58) for the storage of the cosine and sine values of all possible angles of rotation, and a digital/analogue converter (54, 56) at each output from the constant-values store (58), a first and a second analogue multiplier (50, 51) for the multiplication of the line deflection signal by the value read out from the constant-values store (58), of the cosine or respectively the negative sine of the angle of rotation, and a third and a fourth analogue multiplier (52, 53) for the multiplication of the line advance signal by the value read out from the constant-values store (58), of the cosine or respectively the sine of the angle of rotation, and that the outputs from the first and the fourth multipliers (50, 53) are added in a first adding unit (62), and the outputs from the second and the third multipliers (51, 52) are added in a second adding unit (64), the outputs from the adding units being connected each to one pair of deflection coils (6, 8).

20. A device as in one of the Claims 13 to 19, characterized in that before each pair of deflection coils (6, 8) a lowpass filter is inserted.

## Revendications

1. Procédé pour l'identification d'objets, apparaissant devant une fenêtre d'image dans une position et une orientation quelconques et à des moments quelconques, et qui comporte sur une surface tournée vers la fenêtre d'image une caractérisation (70) sous la forme d'un champ de données, lequel comprend au moins des signes distinctifs (72) contrastant une piste (71) de données et plusieurs motifs linéaires prédéfinis de contraste (76), lesquels caractérisent la position et l'orientation de la piste de données (71) ou des pistes de données, ainsi que plusieurs lignes avec des intervalles et/ou des largeurs de lignes différents, procédé dans lequel la fenêtre d'image est explorée séquentiellement par lignes par l'intermédiaire d'un dispositif optique et électronique de conversion, tandis qu'un signal vidéo correspondant à la succession de contrastes ainsi explorée est obtenu, la fenêtre d'image étant explorée dans une première étape du procédé avec une première trame fixe de recherche (80) et lors de l'identification des différents motifs linéaires de contraste (76) la position et l'orientation de ces motifs à l'intérieur de la trame de recherche (80) sont déterminées, l'angle β selon lequel se coupent la piste de données (71) ou les pistes de données, et les lignes de la trame de recherche (80) étant déterminé au cours d'une seconde étape du procédé, tandis que dans une troisième étape du procédé, au cours d'une opération de lecture, le champ de données (70) est exploré en direction de la piste de données ou des pistes de données, selon une trame de lecture décalée en rotation de l'angle β par rapport à la trame de recherche (20), et les signes distinctifs (72) contenus dans la piste de données (71) ou les pistes de données sont lus et décodés, un signal d'avancement de lignes repérant la ligne actuelle de la trame tandis qu'un signal de déviation de lignes repère la section explorée à l'intérieur de cette trame actuelle, procédé caractérisé en ce que:

a) chaque motif linéaire de contraste (76) est constitué de lignes concentriques fermées en soi,

b) le signal d'avancement de lignes et le signal de déviation de lignes sont dérivés de signaux numériques, comptés pendant chaque parcours de la trame en étant disponibles sous la forme d'une première et d'une seconde valeurs de comptage, qui caractérisent respectivement les lignes de trame déjà explorées ou bien les sections déjà explorées à l'intérieur de la trame actuelle, et constituent les coordonnées de comptage (x, y) du point actuellement exploré de la trame dans un système de coordonnées de comptage approprié fixe par rapport à la trame,

c) pendant le parcours de la trame de recherche (80) les coordonnées de comptage respectives $(x_p, y_p)$ correspondant aux points d'intersection entre les lignes de trames et les motifs linéaires de contraste (76) sont mémorisées, tandis que le motif linéaire de contraste correspondant est simultanément identifié,

d) dans la seconde étape du procédé, les coordonnées $(x_z, y_z)$, rapportées à la trame de recherche (80) du centre du motif linéaire de contraste (76) sont calculées à partir des coordonnées de comptage mémorisées $(x_p, y_p)$, et à partir de ces coordonnées du centre $(x_z, y_z)$ l'angle d'intersection β entre les lignes de la trame de recherche (80) et la piste de données (71) ou les pistes de données du champ de données, est calculé.

2. Procédé selon la revendication 1, caractérisé en ce que les lignes de la trame de recherche et de la trame de lecture sont explorées point par point.

3. Procédé selon revendication 1 ou 2, caractérisé en ce que les motifs linéaires de contraste sont constitués de lignes circulaires concentriques.

4. Procédé selon revendication 1, 2 ou 3, caractérisé en ce que la position des motifs linéaires de contraste PIC caractérise l'étendue du champ de données.

5. Procédé selon une des revendications précédentes, caractérisé en ce que la trame dans la troisième étape du procédé présente une densité de lignes supérieure à la trame de la première étape du procédé.

6. Procédé pour l'identification d'objets, apparaissant dans une position et une orientation quelconques et à des instants quelconques devant une fenêtre d'image, et qui comporte sur une surface tournée vers la fenêtre d'image, une caractérisation (70) sous la forme d'un champ de données qui comprend au moins des signes distinctifs contrastant une piste de données (71) et plusieurs motifs linéaires de contraste (PIC, 74, 74a, 75) qui caractérisent la position et l'orientation de la piste de données ou des pistes de données et qui comprennent plusieurs lignes parallèles avec des intervalles et/ou des largeurs de lignes différents, procédé dans lequel la fenêtre de données est explorée séquentiellement par lignes par l'intermédiaire d'un dispositif optique et électronique de conversion et dans lequel est obtenu un signal vidéo correspondant à la succession de contrastes explorée, la fenêtre d'image étant explorée dans une première étape du procédé avec une trame fixe de recherche et lors de l'identification des différents motifs linéaires de contraste, leur position ou orientation à l'intérieur de la trame de contact étant déterminée, dans une seconde étape du procédé l'angle d'intersection β entre la piste de données ou les pistes de données et les lignes de la trame de recherche, étant déterminé, tandis que dans une troisième étape du procédé, au cours d'une opération de lecture, le champ de données est exploré en direction de la piste de données ou des pistes de données selon une trame de lecture décalée en rotation de l'angle d'intersection β vis à vis de la trame de recherche, et que les signes distinctifs contenus dans la piste de données ou les pistes de données, sont lus et décodés, un signal d'avancement de lignes repérant la ligne actuelle de la trame et un signal de déviation de lignes repérant la section explorée à l'intérieur de la ligne actuelle de la trame, procédé caractérisé en ce que:

a) les motifs linéaires de contraste du premier type (74) sont rapportés sur le champ de données avec une première succession d'intervalles de lignes selon une première direction, tandis que les motifs linéaires de contraste du second type (75) sont rapportés sur le champ de données avec une seconde succession d'intervalles de lignes selon une seconde direction,

b) le signal d'avancement de lignes et le signal de déviation de lignes, sont dérivés de signaux numériques comptés pendant chaque parcours de la trame et disponibles sous la forme d'une première et d'une seconde valeurs de comptage, qui caractérisent respectivement les lignes de trame déjà explorées et ou bien les sections explorées à l'intérieur de la ligne de trame actuelle, et qui constituent les coordonnées de comptage (x, y) du point de trame actuel exploré dans un système approprié, fixe par rapport à la trame, de coordonnées de comptage,

c) pendant le parcours de la trame de recherche, les coordonnées de comptage $(x_p, y_p)$ correspondant aux points d'intersection respectifs entre les lignes de la trame et les motifs linéaires de contraste, sont mémorisées, tandis que le modèle linéaire de contraste correspondant (PIC) est en même temps identifié,

d) dans la seconde étape du procédé, l'angle d'intersection β entre les lignes de la trame de recherche et la piste de données ou les pistes de données du champ de données est calculé à partir des coordonnées de comptage $(x_p, y_p)$ mémorisées.

7. Procédé selon la revendication 6, caractérisé en ce que les lignes de la trame de recherche et de la trame de lecture, sont explorées point par point.

8. Procédé selon les revendications 6 ou 7, caractérisé en ce que les motifs linéaires de contraste du premier type (74) s'étendent perpendiculairement à la piste de données (71) ou les pistes de données du champ de données, tandis que les motifs linéaires de contraste du second type (75) s'étendent parallèlement à la piste de données ou aux pistes de données.

9. Procédé selon la revendication 8, caractérisé en ce que les motifs linéaires de contraste du premier et du second types (74, 75) sont disposés alternativement sur une piste (73a) de motifs linéaires de contraste, dont l'orientation par rapport à la piste de données (71) ou aux pistes de données, est connue, l'intervalle entre deux lignes de la trame de recherche (80) étant choisi suffisamment petit pour que chaque motif linéaire de contraste du premier ou du second type (74, 75) soit rencontré au moins une fois lors du parcours de la trame de recherche (80) et que l'angle d'intersection β entre les lignes de la trame de recherche et la piste de données ou les pistes de données du champ de données, ne soit calculé à partir des coordonnées de comptage $(x_p, y_p)$ mémorisées que lorsqu'au moins tous les motifs linéaires de contraste du premier type (74) ou bien tous les motifs linéaires de contraste du second type (75) à l'intérieur de la piste de motifs linéaires de contraste, aient été rencontrés sous un angle minimal d'intersection prédéfini.

10. Procédé selon une des revendications 6 à 9, caractérisé en ce que la trame dans la troisième étape du procédé présente une densité de lignes supérieure par rapport à la trame de la première étape du procédé.

11. Procédé pour l'identification d'objets apparaissant dans une position et une orientation quelconques et à des instants quelconques devant une fenêtre d'image, et qui comporte sur une surface tournée vers la fenêtre d'image une identification (70) sous la forme d'un champ de données, qui comprend au moins des signes distinctifs contrastant une piste de données (71) et un ensemble de motifs linéaires de contraste qui caractérisent la position et l'orientation de la piste de données (71) ou des pistes de données et qui comprennent plusieurs lignes parallèles avec des intervalles et/ou des largeurs de lignes différents, procédé dans lequel la fenêtre d'image est explorée séquentiellement par lignes par l'intermédiaire d'un dispositif optique et électronique de conversion, et dans lequel est obtenu un signal vidéo correspondant à la succession de contrastes explorée, la fenêtre d'image étant explorée dans une première étape du procédé selon une trame de recherche à lignes relativement lâches sous différents angles de recherche α jusqu'à ce que l'ensemble des modèles linéaires de contraste soit rencontré et identifié dans le dernier parcours de trames par au moins deux lignes de la trame, la position et l'orientation de la piste de données (71) ou des pistes de données par rapport à la fenêtre d'image étant déterminées dans la seconde étape du procédé, tandis que dans la troisième étape du procédé, au cours d'une opération de lecture, le champ de données est exploré selon une trame à lignes serrées en direction de la piste de données ou des pistes de données, et que les signes distinctifs contenus dans la piste de données ou les pistes de données, sont lus et décodés, un signal d'avancement de lignes repérant la ligne actuelle de trame, et un signal de déviation de lignes repérant la section explorée à l'intérieur de la ligne actuelle de trame, procédé caractérisé en ce que:

a) les lignes de la trame sont explorées point par point,

b) le signal d'avancement de lignes et le signal de déviation de lignes sont dérivés de signaux numériques comptés pendant chaque parcours de trame et disponibles comme première et seconde valeurs de comptage, ces valeurs caractérisant respectivement les lignes de trame déjà explorées ou bien la section explorée à l'intérieur de la ligne actuelle de trame et constituant les coordonnées de comptage (x, y) du point actuel de trame exploré dans un système correspondant de coordonnées de comptage fixe par rapport à la trame,

c) pendant le dernier parcours de trame de la première étape du procédé, l'angle de recherche $(\alpha_l)$ et les coordonnées de comptage $(x_p, y_p)$ correspondant aux points d'intersection considérés, entre les lignes de la trame et l'ensemble des motifs linéaires de contraste, sont mémorisés, tandis que l'ensemble des motifs linéaires de contraste est simultanément identifié,

d) dans la seconde étape du procédé, l'angle d'intersection $(\beta)$ entre les lignes de trame du dernier parcours de trame au cours de l'opération de recherche, et la piste de données ou les pistes de données du champ de données, est calculé à partir des coordonnées de comptage $(x_p, y_p)$ mémorisées,

e) dans la troisième étape du procédé, la grille à lignes serrées est parcourue sous un angle égal à la somme de l'angle d'intersection $(\beta)$ calculé et le dernier angle de recherche réglé $(\alpha_l)$ et les signes distinctifs contrastant sont lus sur la piste de données ou les pistes de données.

12. Procédé selon la revendication 11, caractérisé en ce que la longueur et/ou la position de l'ensemble de motifs linéaires de contraste caractérisent l'étendue du champ de données, l'intervalle entre des lignes de grilles voisines dans la première étape du procédé étant suffisamment petit par rapport à la longueur de l'ensemble de motifs linéaires de contraste pour qu'une pluralité de lignes de trames coupent l'ensemble de motifs linéaires de contraste lors de l'identification de celui-ci, tandis qu'à partir des coordonnées de comptage (x, y) mémorisées à la fin de la première étape du procédé et qui correspondent aux points d'intersection de la première et de la dernière lignes de trame rencontrant l'ensemble de motifs linéaires de contraste, l'étendue du champ de données dans le système de coordonnées de comptage de la dernière trame d'opération de recherche et ensuite dans le système de coordonnées de comptage de la trame de l'opération de lecture, est calculée, et ensuite la trame de l'opération de lecture est limitée à peu près à l'étendue du champ de données.

13. Dispositif pour la mise en œuvre du procédé selon une des revendications 11 ou 12, dispositif dans lequel la fenêtre d'image (2) est prévue sur la cible (5) d'un vidicon (1), laquelle est explorée par un système déflecteur (12) selon une trame susceptible de pivoter électroniquement et comportant une séquence de lignes, et délivre à sa sortie un signal électrique vidéo qui correspond au champ d'image exploré ligne par ligne et restitue séquentiellement le motif de contraste des lignes explorées sous la forme de successions binaires d'amplitudes, le dispositif comportant un décodeur PIC (16) pour identifier les motifs linéaires de contraste (PIC) ainsi explorés, qui caractérisent la position et l'orientation de la piste de données ou des pistes de données du champ de données, et comprennent plusieurs lignes avec des intervalles et/ou des largeurs de lignes différents, le système déflecteur (12) comportant un premier générateur de balayage (40, 44) pour délivrer périodiquement un signal de déviation de lignes (déviation selon la direction x) et un second générateur de balayage (42, 46) pour délivrer un signal d'avance de lignes (déviation selon la direction y) à la fin de chaque signal de déviation de lignes, les signaux ainsi délivrés parcourant un circuit de rotation de trames (50 à 64) et ensuite commandent, de façon correspondante à l'angle de rotation souhaité, en étant pondérés et combinés entre eux, deux paires de bobines déflectrices décalées entre elles de 90°, dont le champ magnétique dévie le faisceau d'exploration du vidicon (1), selon une trame ayant pivoté de façon correspondante, dispositif caractérisé en ce que:

a) le décodeur PIC (16) identifie un motif linéaire de contraste ou plusieurs motifs linéaires de contraste différents (PIC I, PIC II,...) et, lors d'une identification, délivre un signal d'identification (PIC OUT I, PIC OUT II,...) caractérisant le motif linéaire de contraste concerné,

b) le premier générateur de balayage (40, 44) comprend un premier compteur modulo (40) avec une cadence de comptage prédéfinie et un intervalle de comptage maximal, dont l'état de comptage est converti par un premier convertisseur numérique/analogique (44) en un signal de déviation de lignes proportionnel à l'état du compteur et progressant constamment ou bien par paliers, et appliqué au circuit de rotation de trame (50 à 64),

c) le second générateur de balayage (42, 46) comprend un second compteur modulo (42) dont l'état de comptage, à la limite supérieure de l'intervalle de comptage du premier compteur modulo (40), est incrémenté d'une valeur donnée, converti par un second convertisseur numérique/analogique (46) en un signal d'avance de lignes progressif et proportionnel à l'état du compteur qui est appliqué au circuit de rotation de trame, ainsi qu'un circuit de commande (18) qui, au bout d'un temps déterminé après chaque incrémentation du second compteur modulo (42) démarre à nouveau le premier compteur modulo (40),

d) les états actuels de comptage du premier et du second compteurs modulo (40, 42) sont lus dans une mémoire (14) sous la forme de coordonnées de comptage $(x_p, y_p)$ fixes par rapport à la trame, lorsqu'une ligne de trame coupe un motif linéaire de contraste (PIC I, PIC II) et le décodeur PIC (16) identifie le motif linéaire de contraste et délivre un signal d'identification (PIC OUT I, PIC OUT II) dans la mémoire (14),

e) le circuit de commande (18): e.1) après parcours de la trame de recherche arrête les deux compteurs modulo (40, 42) lorsque le motif linéaire de contraste (PIC) a été suffisamment souvent identifié, et les coordonnées de comptage $(x_p, y_p)$ qui lui sont associées, sont stockées dans la mémoire (14) en étant indicées avec le motif PIC respectivement identifié (PIC I, PIC II, ...); e.2) respectivement après que la limite supérieure d'intervalle du second compteur modulo (42) ait été atteinte, et après le dernier parcours ainsi déclenché du premier compteur modulo (40), l'angle de recherche, $(\alpha)$, augmenté d'un palier prédéfini $(\Delta\alpha)$, est stocké dans la mémoire (14) et le premier compteur modulo (40) démarre pour un nouveau parcours de trame lorsque lors du dernier parcours de grille, le motif linéaire de contraste (PIC) a été identifié moins de m fois $(m \geqslant 2)$,

f) le circuit de commande (18) contient un processeur (20) qui à partir des coordonnées mémorisées $(x_p, y_p)$ et de la position prédéfinie du motif PIC associé, sur le champ de données, calcule l'angle d'intersection $\beta$ entre les lignes de la trame de recherche et les pistes de données du champ caractéristique,

g) le premier et le second générateurs de déflexion (40, 44; 42, 46) sont démarrés pour un nouveau parcours de trame, lors duquel la trame de lecture obtenue est décalée en rotation dans le circuit de rotation de grille (50 à 64) d'un angle total correspondant à la somme de l'angle de recherche mémorisé en dernier lieu $(\alpha_l)$ et de l'angle d'intersection $(\beta)$ calculée.

14. Dispositif selon la revendication 13, caractérisé en ce que le circuit de commande (18) est rendu opérationnel logiciellement par le processeur (20).

15. Dispositif selon revendication 13 ou 14, caractérisé en ce que la limite supérieure et la limite inférieure de l'intervalle de comptage du premier compteur modulo (40) sont susceptibles d'être réglées de façon correspondante au début et à la fin, souhaités lors de l'exploration de la cible, des lignes de trame.

16. Dispositif selon une des revendications 13 à 15, caractérisé en ce que la limite inférieure et la limite supérieure de l'intervalle de comptage du second compteur modulo (42) sont susceptibles d'être réglées de façon correspondante au groupe de lignes exploré souhaité lors de l'exploration de la cible.

17. Dispositif selon une des revendications 13 à 16, caractérisé en ce que l'incrément à l'intérieur de l'intervalle de comptage du premier et du second compteurs modulo (40, 42) est réglable.

18. Dispositif selon une des revendications 13 à 16, caractérisé en ce que l'incrément du premier et du second convertisseurs numériques/analogiques (44, 46) pour le signal de déviation de lignes ou bien le signal d'avance de lignes délivré est réglable.

19. Dispositif selon une des revendications 13 à 18, caractérisé en ce que le circuit de rotation de grille (50 à 64) comprend une mémoire à valeur fixe (ROM, 58) pour la mémorisation des valeurs de cosinus et des valeurs de sinus de tous les angles de rotation possibles, et un convertisseur numérique/analogique (54, 56) à chaque sortie de la mémoire à valeur fixe (58), un premier et un second multiplicateurs analogiques (50, 51) pour multiplier le signal de déviation de lignes par la valeur du cosinus ou bien la valeur négative du sinus de l'angle de rotation lue à partir de la mémoire fixe (58), ainsi qu'un troisième et un quatrième multiplicateurs analogiques (52, 53) pour multiplier le signal d'avance de lignes par la valeur de cosinus ou bien la valeur de sinus de l'angle de rotation lue à partir de la mémoire fixe (58), tandis que les sorties du premier et du second multiplicateurs (50, 53) sont totalisées dans un premier organe totalisateur (62), et que les sorties du second et du troisième multiplicateurs (51, 52) sont totalisées dans un second organe totalisateur (63), organes dont les sorties sont respectivement reliées à l'une des paires de bobines déflectrices (6, 8).

20. Dispositif selon une des revendications 13 à 19, caractérisé en ce qu'un filtre passe-bas est inséré en amont de chacune des paires de bobines déflectrices (6, 8).

## FIG. 1

## FIG. 2

N 3 ...... 601 ......

## FIG. 3

P 3 ... 789

## FIG. 4

6011 M

Fig.5

# Fig.6a

# Fig.6b

25

# Fig.7a

Fig.7b

(1) →

```
        ┌─────────────┐ ⌐51
        │   zweiter   │
        │   analoger  │ ──────────────────┐
        │ Multiplizierer│                  │
        └─────────────┘                    │    ┌───┐
              ↑                            └───→│ + │──→ Y'
              │                                 └───┘
        ┌─────────────┐ ⌐56                      ⌐64
        │    D/A -    │
        │   Wandler   │
        └─────────────┘
              ↑
        ┌─────────────┐ ⌐58
        │  Speicher   │
        │   — sin α   │
        └─────────────┘
```

(2) →

```
        ┌─────────────┐ ⌐52
        │   dritter   │
        │   analoger  │ ────────────────────┘
        │ Multiplizierer│
        └─────────────┘
              ↑
        ┌─────────────┐ ⌐54
        │    D/A -    │
        │   Wandler   │
        └─────────────┘
              ↑
        ┌─────────────┐ ⌐58
        │  Speicher   │
        │    cos α    │
        └─────────────┘
```

Fig. 8

Fig. 9

72    70

1300

75

Fig. 10

77  78

72

71 ...680

71 ...708

74

70

70

Fig. 11

130........65.3

74    74